# EUROPEAN PATENT APPLICATION

(11) **EP 4 750 142 A1**
(43) Date of publication of application: **27.05.2026**
(21) Application number: 23945459.8
(22) Date of filing: 19.07.2023
(51) Int. Cl.: H04W 28/06

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: GAO, Ning, Dongguan, Guangdong 523860 (CN); LUO, Chaoming, Dongguan, Guangdong 523860 (CN); LU, Liuming, Dongguan, Guangdong 523860 (CN); LI, Yapu, Dongguan, Guangdong 523860 (CN)
(74) Representative: Penza, Giancarlo
(86) International application number: PCT/CN2023/108220
(87) International publication number: WO 2025/015568

(57) **Abstract**

The present application provides a wireless communication method and a communication device. The method comprises: a first device acquires a first data unit sent by a second device to a third device, the first data unit comprising a first field; and the first device sends a second field, the second field being time aligned with and having the same bandwidth as the first field. On the basis of the present application, the first device can send the second field that is time aligned with and has the same bandwidth as the first field. Therefore, the second field can be sent without a TXOP. That is, even if the first device does not obtain a TXOP, the second field can be actively sent on the basis of the first field. Thus, on the basis of the present application, the first device can actively send a signal by means of the second field, avoiding the problem of time delay caused by passive waiting.

## Description

### TECHNICAL FIELD

The present disclosure relates to the technical field of communication, and in particular, to methods for wireless communication and communication devices.

### BACKGROUND

In some communication systems, such as wireless local area network (WLAN) system, if the first device does not obtain a transmission opportunity (TXOP), the first device cannot send data and can only receive data. For the first device that does not obtain the TXOP, the owner of the TXOP may provide a transmission service for the first device through technologies such as TXOP preemption, coordinated-time division multiple address (C-TDMA), null data physical layer protocol data unit (NDP) feedback reporting, and the like, so as to meet the transmission requirements of the first device. However, based on the related art described above, the first device can only passively wait for the owner of the TXOP to provide the transmission service in most cases. If the waiting time is long, the transmission delay of the first device will be long or the phenomenon of delay jitter may occur.

### SUMMARY

The present disclosure provides methods for wireless communication and communication devices. Various aspects of the present disclosure are described below.

In the first aspect, a method for wireless communication is provided. The method includes the following operations. The first device acquires the first data unit sent by the second device to the third device. The first data unit includes the first field. The first device sends the second field. The second field is aligned in time with the first field, and the second field has a same bandwidth as the first field.

In the second aspect, a method for wireless communication is provided. The method includes the following operation. The second device sends the first data unit to the third device. The first data unit includes the first field. The second field sent by the first device is aligned in time with the first field, and the second field has a same bandwidth as the first field.

In the third aspect, a method for wireless communication is provided. The method includes the following operations. The third device receives the first data unit sent by the second device. The first data unit includes the first field. The third device receives the second field sent by the first device. The second field is aligned in time with the first field, and the second field has a same bandwidth as the first field.

In the fourth aspect, a communication device is provided. The communication device is the first device. The communication device includes an acquisition unit and the first sending unit. The acquisition unit is configured to acquire the first data unit sent by the second device to the third device. The first data unit includes the first field. The first sending unit is configured to send the second field. The second field is aligned in time with the first field, and the second field has a same bandwidth as the first field.

In the fifth aspect, a communication device is provided. The communication device is the second device. The communication device includes the second sending unit. The second sending unit is configured to send the first data unit to the third device. The first data unit includes the first field. The second field sent by the first device is aligned in time with the first field, and the second field has a same bandwidth as the first field.

In the sixth aspect, a communication device is provided. The communication device is the third communication device. The communication device includes the first receiving unit and the second receiving unit. The first receiving unit is configured to receive the first data unit sent by the second device. The first data unit includes the first field. The second receiving unit is configured to receive the second field sent by the first device. The second field is aligned in time with the first field, and the second field has a same bandwidth as the first field.

In the seventh aspect, a communication device is provided. The communication device includes a processor and a memory. The memory is configured to store one or more computer programs, and the processor is configured to invoke the computer programs in the memory to cause the communication device to perform a part or all of the operations in the methods of the first, second, and third aspects.

In the eighth aspect, the embodiments of the present disclosure provide a communication system. The communication system includes the above communication devices. In another possible design, the system may further include other devices that interact with the communication devices in the solutions provided by the embodiments of the present disclosure.

In the ninth aspect, the embodiments of the present disclosure provide a computer-readable storage medium. The computer-readable storage medium stores a computer program that causes a communication device to perform a part or all of the operations in the methods of the above aspects.

In the tenth aspect, the embodiments of the present disclosure provide a computer program product. The computer program product includes a non-transitory computer-readable storage medium storing a computer program operable to cause a communication device to perform a part or all of the operations in the methods of the above aspects. In some implementations, the computer program product may be a software installation package.

In the eleventh aspect, the embodiments of the present disclosure provide a chip. The chip includes a memory and a processor. The processor is configured to invoke and execute a computer program from the memory to implement a part or all of the operations in the methods of the above aspects.

Based on the present disclosure, the first device may send the second field that is aligned in time with the first field, and the second field has a same bandwidth as the first field. Therefore, the sending of the second field may not be restricted by the TXOP. That is, even if the first device does not acquire the TXOP, the second field may be actively sent based on the first field. Therefore, according to the present disclosure, the first device can actively send a signal through the second field, thereby avoiding the delay problem caused by passive waiting.

### BRIEF DESCRIPTION OF THE DRAWINGS

[FIG. 1 is a schematic diagram of a wireless communication system to which the embodiments of the present disclosure are applied.
FIG. 2 is an example diagram of a TXOP preemption process.
FIG. 3 is an example diagram of a C-TDMA process.
FIG. 4 is a schematic diagram of a frame format of an NDP feedback report poll (NFRP) trigger frame.
FIG. 5 is a schematic diagram of a common info field format in the NFRP trigger frame.
FIG. 6 is a schematic diagram of a user information field format in the NFRP trigger frame.
FIG. 7 is an example diagram of a high efficient trigger based (HE TB) feedback NDP frame format.
FIG. 8 is a schematic flowchart of a method for wireless communication according to an embodiment of the present disclosure.
FIG. 9 is an example diagram of a method for wireless communication according to an embodiment of the present disclosure.
FIG. 10 is an example diagram of another method for wireless communication according to an embodiment of the present disclosure.
FIG. 11 is an example diagram of another method for wireless communication according to an embodiment of the present disclosure.
FIG. 12 is a schematic diagram of a physical protocol data unit (PPDU) format according to an embodiment of the present disclosure.
FIG. 13 is a schematic diagram of a universal signal (U-SIG) field format according to an embodiment of the present disclosure.
FIG. 14 is a schematic diagram of an ultra high reliability signal (UHR-SIG) field format according to an embodiment of the present disclosure.
FIG. 15 is a schematic diagram of a setup element format according to an embodiment of the present disclosure.
FIG. 16 is a schematic diagram of a format of a second field update request frame according to an embodiment of the present disclosure.
FIG. 17 is a schematic diagram of a format of a second field update response frame according to an embodiment of the present disclosure.
FIG. 18 is a schematic diagram of a format of report element according to an embodiment of the present disclosure.
FIG. 19 is a schematic diagram of a format of a user identifying extension (UIE) report frame according to an embodiment of the present disclosure.
FIG. 20 is a schematic flowchart of a method according to embodiment 1 of the present disclosure.
FIG. 21 is a schematic flowchart of a method according to embodiment 2 of the present disclosure.
FIG. 22 is a schematic flowchart of a method according to embodiment 3 of the present disclosure.
FIG. 23 is a schematic structural diagram of a communication device according to an embodiment of the present disclosure.
FIG. 24 is a schematic structural diagram of another communication device according to an embodiment of the present disclosure.
FIG. 25 is a schematic structural diagram of another communication device according to an embodiment of the present disclosure.
FIG. 26 is a schematic structural diagram of an apparatus for communication according to an embodiment of the present disclosure.

### DETAILED DESCRIPTION

Hereinafter, technical solutions in the present disclosure will be described with reference to the accompanying drawings.

### Communication system

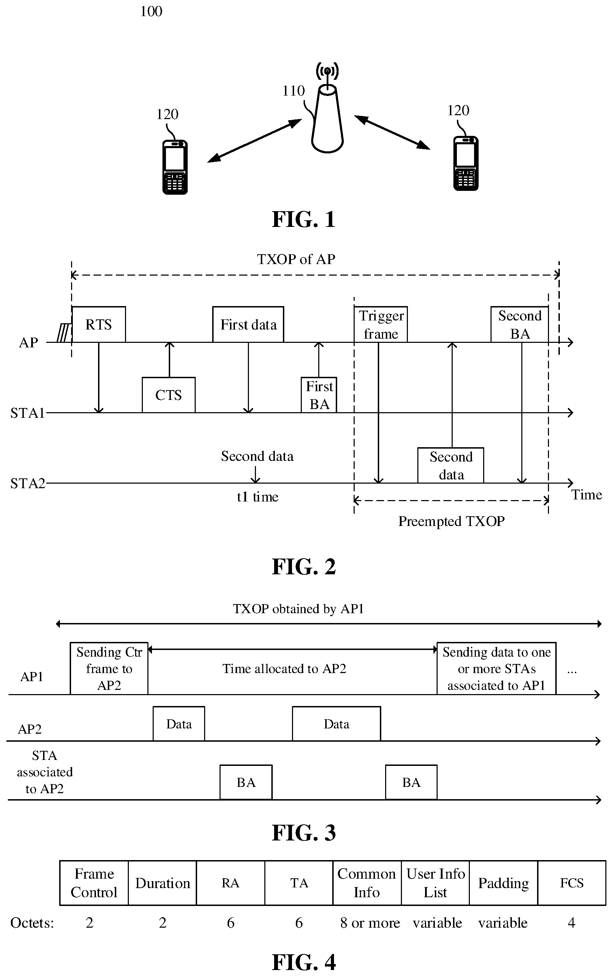

FIG. 1 illustrates a wireless communication system 100 to which the embodiments of the present disclosure are applied. The wireless communication system 100 may include an access point (AP) 110, and a station (STA) 120 that accesses the network through the AP 110.

In some scenarios, an AP may be referred to as an AP STA. That is, an AP is also a STA in a sense.

In some scenarios, the STA may be referred to as a non-AP STA.

The communication in the communication system 100 may be a communication between an AP and a STA, a communication between a STA and a STA, or a communication between a STA and a peer STA. The peer STA may refer to a device in peer side that communicates with the STA, for example, the peer STA may be an AP or a STA.

The AP is equivalent to a bridge connecting wired network and wireless network. Its main function is to connect various wireless network clients together, and then connect the wireless network to Ethernet. The AP device may be a network device (such as a router) or a terminal device (such as a mobile phone) with a wireless fidelity (WiFi) chip.

It should be understood that the role of the STA in the communication system is not absolute. For example, in some scenarios, when the mobile phone is connected to the router, the mobile phone is the STA, and when the mobile phone serves as a hotspot for other mobile phones, the mobile phone acts as an AP.

The AP and the STA may be devices used in the Internet of Vehicles, internet of things nodes, sensors, etc. in the internet of things (IoT), smart cameras, smart remote controllers, smart water meters, etc. in smart homes, and sensors in smart cities.

In some embodiments, both the STA and the AP may support the 802.11 standards. The STA or AP may support various current and future 802.11 family WLAN standards such as 802.11 ax, 802.11 ac, 802.11 n, 802.11 g, 802.11 b, and 802.11 a.

In the embodiments of the present disclosure, the STA may be a mobile phone, a tablet computer (Pad), a notebook computer, a handheld computer, a mobile internet device (MID), a wearable device, a virtual reality (VR) device, an augmented reality (AR) device, a wireless terminal in industrial control, a wireless terminal in self driving, a wireless terminal in a remote medical surgery, a wireless terminal in a smart grid, a wireless terminal in a transportation safety, a wireless terminal in a smart city, a wireless terminal in a smart home, or the like supporting WLAN/WiFi technology.

The frequency bands supportable by the WLAN technology may include, but are not limited to, low frequency bands (for example, 2.4 GHz, 5 GHz, 6 GHz), high frequency bands (for example, 60 GHz).

FIG. 1 exemplarily illustrates one AP and two STAs. Alternatively, the communication system 100 may include multiple APs and another number of STAs, which are not limited by the embodiments of the present disclosure.

It should be understood that a device having a communication function in the network/system in the embodiments of the present disclosure may be referred to as a communication device. Taking the communication system 100 illustrated in FIG. 1 as an example, the communication device may include an AP 110 and a STA 120 having a communication function, and the AP 110 and the STA 120 may be specific devices described above, and will not be repeated herein. The communication device may also include other devices in the communication system 100, such as other network entities such as network controllers and gateways, which are not limited in the embodiments of the present disclosure.

The AP and STA may be deployed on land, including indoor or outdoor, handheld or vehicle-mounted. They may also be deployed on the water. They may also be deployed on aircraft, balloons and satellites in the air. In the embodiments of the present disclosure, the scenario in which the AP and the STA are located is not limited.

It should be understood that all or part of the functionality of the communication device in the present disclosure may also be implemented by software functionality running on hardware, or by virtualization functionality instantiated on a platform, such as a cloud platform.

### Transmission opportunity (TXOP)

The TXOP is a mechanism for allocating radio resources. In some communication systems, such as WLAN communication systems, limited wireless resources need to be shared by multiple devices. When a device obtains a TXOP, the device may continuously send data within the TXOP. Channel contention needs to be performed by other devices to acquire the TXOP before sending data.

The TXOP preemption technology may allow a STA that does not obtain a TXOP to preempt the remaining TXOP of the current holder of the TXOP. Specifically, the current holder of the TXOP may send a trigger frame to other devices to inform other devices that the TXOP may be preempted. After other devices receive the trigger message, they may preempt the TXOP to send data.

For ease of understanding, the TXOP preemption process is described below through the example illustrated in FIG. 2.

As illustrated in FIG. 2, the AP obtains a long-time TXOP through channel contention. Within the TXOP of the AP, after the AP and the STA 1 perform a handshake via request to send (RTS) and clear to send (CTS), the AP sends the first data to the STA 1. After receiving the first data, the STA1 sends the first block acknowledgement (BA) frame to the AP. The AP sends a trigger message to devices including the STA2. If the STA 2 has data to be sent, it may preempt the TXOP of the AP. As illustrated in FIG. 2, the STA2 has the second data to be sent to the AP at time t1. The second data may be, for example, uplink (UL) low latency (LL) data. Therefore, the STA2 preempts the TXOP and obtains the preempted TXOP. Within the preempted TXOP, the STA 2 may send the second data to the AP. After receiving the second data, the AP may send the second BA corresponding to the second data.

It may be seen that in a case that the AP does not send the trigger frame, the STA 2 cannot preempt the TXOP, and thus cannot transmit data.

Regarding the TXOP preemption technology, the reference is made to the introduction in the standard document "11-23-0018-01-0uhr-low-latency-support-in-uhr)".

### C-TDMA

The C-TDMA technology may allow a primary AP to share a part of the time within its TXOP with a secondary AP, so that the secondary AP can provide the transmission service of uplink or downlink low latency service for the STA in its basic service set (BSS) as soon as possible. During the shared TXOP, the primary AP cannot use the corresponding medium, that is, cannot perform data transmission. After the duration of the shared TXOP ends, the primary AP resumes normal uplink and downlink transmission with the STA in its BSS.

For ease of understanding, the C-TDMA will be described below by an example illustrated in FIG. 3. In FIG. 3, the AP1 is the primary AP and the AP2 is the secondary AP.

Within the TXOP obtained by the AP1, a control frame (a coordinated TXOP indication (CAP TXOP request, CTR) frame as illustrated in figure) is sent by the AP1 to the AP2, so as to share a period of time in the TXOP to the AP2. Within the time allocated to AP2, the data is sent twice by the AP2 to the STA associated with AP2 and the corresponding BA frame is received. After the time allocated to AP2, the AP2 stops sending data, and the AP1 starts to send data to one or more STAs associated with the AP1.

Regarding C-TDMA technology, the reference is made to the introduction in the standard document "11-23-0261-00-0uhr-tdma-for-wifi-8".

### null data packet (NDP) feedback report

In the related art (for example, IEEE 802.11 ax standard), NDP feedback report is defined. The NDP feedback report is a set of multiuser (MU) UL detection mechanisms. This mechanism enables the AP to detect the buffer state of the uplink data of the STA, thereby allocating reasonable transmission resources to the STA that needs to send the uplink data.

The MU UL detection mechanism also defines two related frame structures: an NDP feedback report poll (NFRP) trigger frame and a high efficient trigger based (HE TB) feedback NDP frame. The AP sends the NFRP trigger frame to multiple STAs to trigger the STAs to feed back the HE TB feedback NDP frame. The AP can learn which STAs need to participate in subsequent MU UL transmissions by parsing the high efficient long training field (HE-LTF) field in the HE TB feedback NDP frame.

Hereinafter, the NFRP trigger frame and the HE TB feedback NDP frame are described.

FIG. 4 is a schematic diagram of a frame format of an NFRP trigger frame. The NFRP trigger frame may include a frame control field, a duration field, a receive address (RA) field, a transfer address (TA) field, a common info field, a user info list field, a padding field, and a frame check sequence (FCS) field. The number of octets in each field is illustrated in FIG. 4.

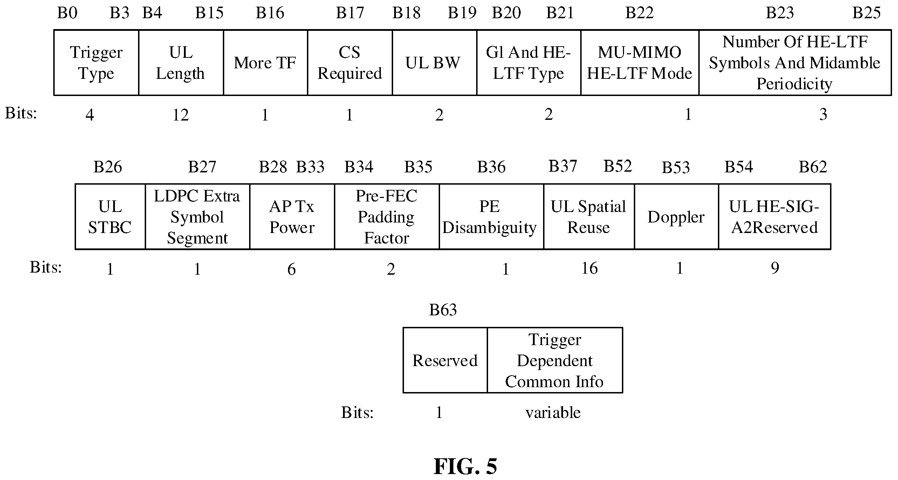

The common info field format in the NFRP trigger frame may be illustrated in FIG. 5. As illustrated in FIG. 5, the common info field may include a trigger type field, an UL length field, a more TF field, a CS required field, an uplink bandwidth (UL BW) field, a guard interval (GI) and HE-LTF type field, a MU-MIMO HE-LTF mode field, a number of HE-LTF symbols and midamble periodicity field, an UL STBC field, an LDPC extra symbol segment field, an AP TX power field, a pre-FEC padding factor field, a PE disambiguity field, an UL spatial reuse field, a doppler field, an UL HE-SIG-A2 reserved field, a reserved field, and a trigger dependent common info field.

The UL BW field is used to represent the bandwidth of the NDP feedback report response. The UL STBC field, LDPC extra symbol segment field, pre-FEC padding factor field, PE disambiguity field, UL spatial reuse field, and doppler subfield are preserved. The number of HE-LTF symbols and midamble periodicity subfield indicates the number of HE-LTF symbols presented in the NDP feedback report response, and is set to 1. The GI and HE-LTF type subfield is set to 2. The trigger dependent common info does not exist.

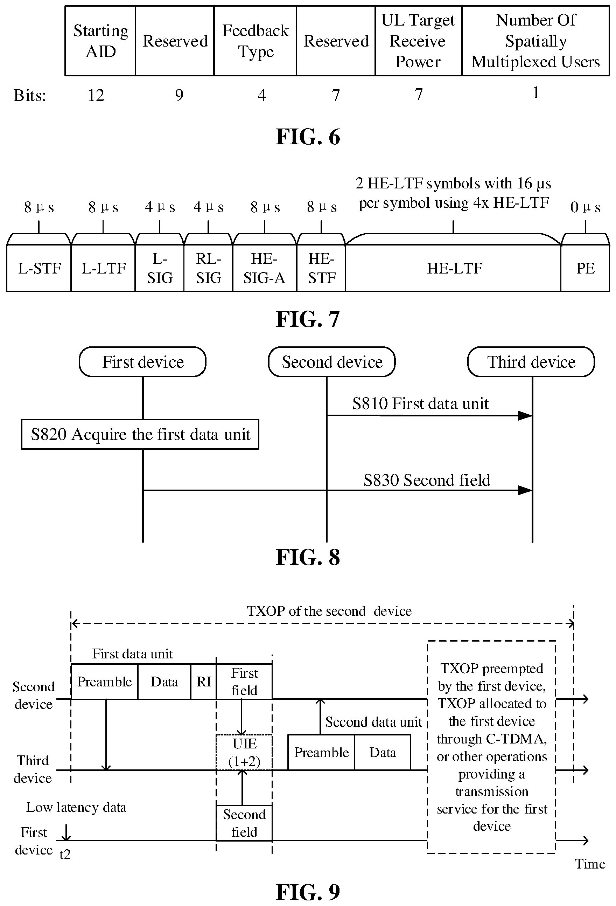

The format of the user info list field in the NFRP trigger frame is illustrated in FIG. 6. The user info list field includes a staring association identifier (staring AID) field, a reservation field, a feedback type field, an UL target receive power field, and a number of spatially multiplexed users field.

The starting AID field defines the first association identifier (AID) in the AID range, which is scheduled to respond to the NFRP trigger frame.

The feedback type field is used to indicate the type of feedback information carried by the HE TB feedback NDP.

The UL target receive power field represents the expected receive signal power measured at the antenna connector of the AP and averaged across the antennas.

The number of spatially multiplexed users field represents the number of STAs multiplexed on the same group of tones in the same resource unit (RU), and is encoded to be: the number of STAs - 1.

The HE TB feedback NDP is used to carry NDP feedback report information. FIG. 7 is an example diagram of a HE TB feedback NDP frame format.

The HE TB feedback NDP frame may include a legacy short training field (L-STF), a legacy long training field (L-LTF), a legacy SIGNAL (L-SIG) field, a repeated L-SIG field, a high efficient SIGNAL field A (HE-SIG-A), a high efficient short training field (HE-STF) and an HE-LTF field, a packet extension (PE).

The different RU tone set indexes (RU _ TONE _ SET _ INDEX) in the HE-LTF field are used to identify the AIDs of different STAs and the feedback information (FEEDBACK _ STATUS). The HE-LTF tone mapping in the HE TB feedback NDP is illustrated in Table 1.

**Table 1**

| RU_T ONE SET_ INDE X | 80MHz | | 40MHz | | 20MHz | |
|---|---|---|---|---|---|---|
| | Tone with energy when the feedback informatio n is 1 (K_{tone_NDPu} | Tone with energy when the feedback information is 0 (K_{tone_NDPu} If FEEDBACK_S | Tone with energy when the feedback information is 1 (K_{tone_NDPu} If FEEDBACK_S | Tone with energy when the feedback information is 0 (K_{tone_NDPu} If FEEDBACK_S | Tone with energy when the feedback information is 1 (K_{tone_NDPu} If FEEDBACK_ | Tone with energy when the feedback information is 0 (K_{tone_NDPu} If FEEDBACK_ |
| | If FEEDBAC K_STATU S is 1) | TATUS is 0) | TATUS is 1) | TATUS is 0) | STATUS is 1) | STATUS is 0) |
| 1 | Use 20 MHz FFEDBAC K_STATU S = 1 Subcarrier Indices-384 | Use 20 MHz FFEDBACK_S TATUS = 0 Subcarrier Indices-384 | Use 20 MHz FFEDBACK_S TATUS = 1 Subcarrier Indices-128 | Use 20 MHz FFEDBACK_S TATUS = 0 Subcarrier Indices-128 | -113,-77,-41,6,42,78 | -112,-76,-40,7,43,79 |
| 2 | | | | | -111,-75,-398,44,80 | -110,-74,-389,45,81 |
| 3 | | | | | -111,-75,-398,44,80 | -110,-74,-389,45,81 |
| 4 | | | | | -109,-73,-3710,46,82 | -108,-72,-36,11,47,83 |
| 5 | | | | | -107,-71,-35,12,48,84 | -106,-70,-34,13,49,85 |
| 6 | | | | | -105,-69,-3314,50,86 | -104,-68,-32,15,51,87 |
| 7 | | | | | -103,-67,-31,16,52,88 | -102,-66,-30,17,53,89 |
| 8 | | | | | -101,-65,-29,18,54,90 | -100,-64,-28,19,55,91 |
| 9 | | | | | -99,-63,-2720,56,92 | -98,-62,-26,21,57,93 |
| 10 | | | | | -97,-61,-2522,58,94 | -96,-60,-24,23,59,95 |
| 11 | | | | | -95,-59,-23,24,60,96 | -94,-58,-22,25,61,97 |
| 12 | | | | | -93,-57,-2126,62,98 | -92,-56,-20,27,63,99 |
| 13 | | | | | -91,-55,-19,28,64,100 | -90,-54,-18,29,65,101 |
| 14 | | | | | -89,-53,-17,30,66,102 | -88,-52,-16,31,67,103 |
| 15 | | | | | -87,-51,-15,32,68,104 | -86,-50,-1433,69,105 |
| 16 | | | | | -85,-49,-13,34,70,106 | -84,-48,-12,35,71,107 |
| 17 | | | | | -83,-47,-11,36,72,108 | -82,-46,-1037,73,109 |
| 18 | | | | | -81,-45,-9,38,74,110 | -80,-44,-8,39,75,111 |
| 19-36 | Use 20 MHz FFEDBAC K_STATU S = 1 Subcarrier Indices-128 | Use 20 MHz FFEDBACK_S TATUS = 0 Subcarrier Indices-128 | Use 20 MHz FFEDBACK_S TATUS = 1 Subcarrier Indices+128 | Use 20 MHz FFEDBACK_S TATUS = 0 Subcarrier Indices+128 | | |
| 37-54 | Use 20 MHz FFEDBAC K_STATU S = 1 Subcarrier Indices+128 | Use 20 MHz FFEDBACK_S TATUS = 0 Subcarrier Indices+128 | | | | |
| 55-72 | Use 20 MHz FFEDBAC K_STATU S = 1 Subcarrier Indices+38 4 | Use 20 MHz FFEDBACK_S TATUS = 0 Subcarrier Indices+384 | | | | |
| The RU_TONE_SET_INDEX for 80+80 MHz and 160Mhz shall use the 80 MHz RU_TONE_SET_INDEX definition for the lower and upper 80MHz. The RU_TONE_SET_INDEX values 1-72 are mapped to the lower 80 MHz, and the RU_TONE_SET_INDEX values 73-144 are mapped to the upper 80 MHz | | | | | | |

In Table 1, the information in each cell may indicate the correspondence relationship between the corresponding RU tone set index and the tone capable of having energy. Each RU tone set index may correspond to one STA (which is indicated by AID). When the bandwidth (BW) is 20 MHz, the feedback information FEEDBACK _ STATUS = 1 corresponds to the-113th, -77th, -41st, 6th, 42nd, and 78th tones in the HE-LTF having energy, and the other tones have no energy. The feedback information FEEDBACK _ STATUS = 0 corresponds to the-112th, -76th, -40th, 7th, 43rd, and 79th tones in the HE-LTF having energy, and the other tones have no energy. When the BW is 40 MHz or 80 MHz, the tone mapping for 20 MHz is expanded by 1 and 3 times, respectively, so that more STAs may be mapped (which are indicated by AIDs).

If the first device does not obtain the TXOP, the first device cannot send data and can only receive data. For the first device that does not obtain the TXOP, the TXOP of other devices may be obtained by technologies such as TXOP preemption, C-TDMA, HE TB feedback NDP, and the like to realize the sending of data. For TXOP preemption or C-TDMA, the first device can only passively implement the sending of data. Taking TXOP preemption as an example, the first device needs to receive a trigger frame sent by the owner of the TXOP before sending data by preempting the TXOP. However, before the owner of the TXOP sends the trigger frame, the first device can only passively wait and cannot actively preempt the TXOP. Taking C-TDMA as an example, the first device can send data only after the owner of the TXOP shares the TXOP with the first device. Therefore, when the owner of the TXOP has not shared the TXOP, the first device can only passively wait and cannot actively request sharing of the TXOP. For HE TB feedback NDP, this mechanism can only be applied to MU UL transmission procedures led by the AP. For the first device in other transmission procedures, such as MU DL, SU UL, or SU DL, this technology cannot be applied. Based on this, it may be understood that in many transmission procedures, the first device can only passively wait for an indication from the owner of the TXOP or the AP, before it can start transmitting data, which may cause that the data transmission request of the first device cannot be discovered in time, resulting in a long data transmission delay and delay jitter.

FIG. 8 is a schematic flowchart of a method for wireless communication according to an embodiment of the present disclosure, which is used to solve the above problems. The method illustrated in FIG. 8 may be performed by the first device, the second device, and the third device. The first device, the second device, and the third device may be associated. The method illustrated in FIG. 8 may include the operations S810 to S830.

In operation S810, the second device sends the first data unit to the third device.

In some embodiments, the second device may be a device that obtains the TXOP. Taking the scenario illustrated in FIG. 9 as an example, the second device may obtain a TXOP for a period of time. Within the TXOP of the second device, the second device performs frame interaction with the third device. The second device may send the first data unit to the third device during the TXOP. The third device may reply the second data unit in response to the first data unit. The second data unit may include, for example, a BA frame.

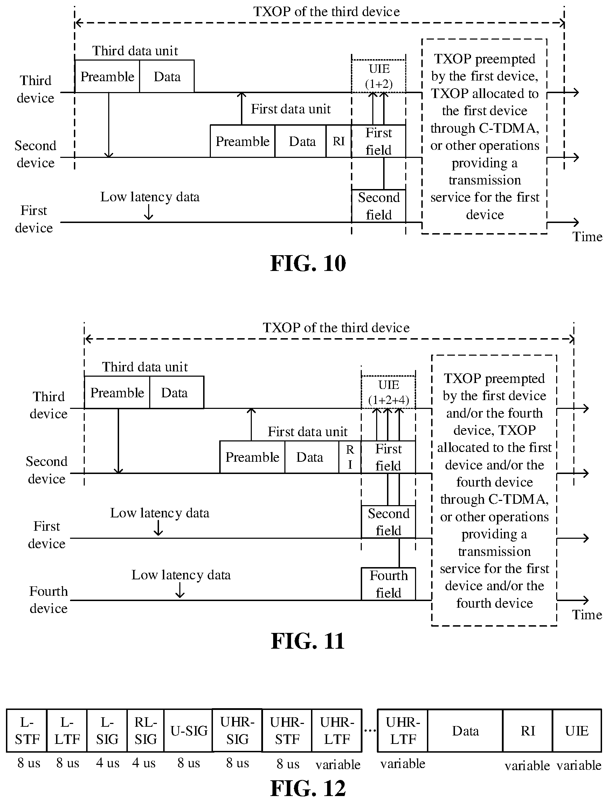

In some embodiments, the third device may be a device that obtains the TXOP. That is, the first data unit may be a response data unit. The response data unit may include a BA frame. Taking the scenario illustrated in FIG. 10 as an example, the third device obtains a TXOP for a period of time. Within the TXOP of the third device, the third device may send the third data unit to the second device. The second device may reply to the first data unit in response to the third data unit.

It should be noted that the first data unit may be a physical protocol data unit (PPDU). For example, the first data unit may be an ultra high reliability (UHR) PPDU. The UHR PPDU may include a UHR MU PPDU or a UHR ER PPDU.

The first data unit may include the first field.

The first data unit may include the first field, or may not include the first field.

In some embodiments, in a case that the owner of the TXOP may provide transmission services for other devices, the first data unit may include the first field. Here, providing the transmission service may include actions causing other devices that do not obtain the TXOP can also send data, such as allowing other devices to preempt the TXOP, being able to share the TXOP with other devices, and so on. For example, in a case that non-low latency data is interacted between the second device and the third device (for example, the first data unit carries non-low latency data), the first data unit may include the first field.

In some embodiments, in a case that the owner of the TXOP cannot or does not wish to provide transmission services for other devices, the first data unit may not include the first field. For example, in a case that the low latency data is interacted between the second device and the third device (for example, the first data unit carries the low latency data), the first data unit may not include the first field.

In operation S820, the first device acquires the first data unit.

In response to the first device acquiring the first data unit, the first device may determine whether the first data unit includes the first field. In a case that the first data unit includes the first field, the following operation S830 may be performed.

In the operation S830, the first device sends the second field to the third device.

In some embodiments, the time for the first field may cover the time for the second field. That is, the second field may be transmitted within the transmission time of the first field. For example, the time of the first field and the time of the second field are aligned. That is, the first field and the second field may be transmitted in the same time. As illustrated in FIG. 9 or FIG. 10, the first field is aligned in time with the first field.

In some embodiments, the bandwidth of the first field may be same as the bandwidth of the second field. That is, the first field and the second field may occupy the same bandwidth. The bandwidth may be a bandwidth corresponding to the TXOP. On the same bandwidth, the first field and the second field may occupy different tones so that the third device may detect the first field and the second field.

Based on the present disclosure, the first device may send the second field that is aligned in time with the first field. Therefore, the sending of the second field may not be restricted by the TXOP. That is, even if the first device does not acquire the TXOP, the second field may be actively sent based on the first field. Therefore, according to the present disclosure, the first device can actively send a signal through the second field, thereby avoiding the delay problem caused by passive waiting.

In some embodiments, the second field may belong to a field set, and the field set may include one or more fields that are aligned in time with the first field and have the same bandwidth as the first field. For example, the first device may belong to multiple devices. The multiple devices may send multiple fields, respectively. The multiple fields may be aligned in the time with the first field and have the same bandwidth as the first field. It should be understood that the third device may detect multiple fields in the field set, thereby receiving signals respectively transmitted by the multiple devices.

In some embodiments, the second field may include a data transmission requirement of the first device. That is, the first device may request data transmission through the second field. In response to the second field, the owner of the TXOP may provide a transmission service for the first device, so that the first device transmits data. For example, if the third device is the owner of the TXOP, the third device may provide a transmission service to the first device in response to receiving the second field. Alternatively, if the second device is the owner of the TXOP, the third device may forward the second field or the information acquired through the second field to the owner of the TXOP, so that the second device provides the transmission service to the first device.

The manner for the owner of the TXOP providing the transmission service to the first device is not limited in the present disclosure. For example, the owner of the TXOP may send a trigger frame to the first device, so that the first device preempts the TXOP. Alternatively, the owner of the TXOP may allocate the TXOP to the first device through C-TDMA.

Therefore, it may be seen that the first device may actively request to send data through the second field, so that the owner of the TXOP can accurately provide the transmission service for the first device. It may be understood that when the first device has data to be sent, the first device may send a data transmission request through the second field as soon as possible, so as to transmit the data, thereby avoiding long delay and delay jitter caused by passively waiting for the owner of the TXOP to provide service to the first device. In addition, compared with related technologies that require multiple signals to be interacted, in the present disclosure, the data transmission request of the device can be discovered by receiving the second field. Accordingly, according to the present disclosure, signaling overhead can be reduced.

In some embodiments, in a case that the first device generates data that needs to be sent, the first device may acquire the first data unit. It may be understood that if the first device does not generate data that needs to be sent, the first device may not acquire the first data unit, thereby reducing energy consumed by acquiring the first data unit, and further reducing energy consumption of the first device.

In some embodiments, the data transmission requirement of the first device indicated by the second field may include a low latency data transmission requirement. With continued reference to FIG. 9, the first device generates a low latency data that needs to be sent at time t2. After time t2, the first device may acquire the first data unit and send the second field. The second field may indicate the low latency data transmission request at time t2.

Compared with the method for discovering the low latency service in the related art, in the present disclosure, a sending request for the low latency service may be actively informed to a specific STA, so that the specific STA can accurately provide transmission service for the STA. Therefore, according to the present disclosure, the efficiency of discovering the low latency service can be improved, and the signaling overhead can be reduced, thereby effectively reducing the delay and delay jitter in the process of transmitting the low latency service at the cost of lower signaling overhead.

In some embodiments, the second field may be used to indicate identity information of the first device. The first field may be used to indicate an identity of the second device. Here, the identity information may include, for example, an AID.

Based on this, both the first field and the second field may be carried in a user identifying extension (UIE) field indicating identity information. The information indicated by the UIE field may be different for the first field and the second field. The first device may belong to multiple devices, and the multiple devices may respectively send their respective corresponding fields through the UIE fields.

After receiving the second field, the third device may obtain the identity information of the first device by parsing the second field. That is, the third device may determine, according to the identity information indicated by the second field, that the device that sends the second field is the first device. In a case that the second field indicates the transmission requirement of the device that sends the second field, it may be determined according to the identity information indicated by the second field that the second field indicates the transmission requirement of the first device, which facilitates the owner of the TXOP to provide service to the first device in a targeted manner. Similarly, the first field may be used to indicate identity information of the first device.

With continued reference to FIG. 9, when detecting the UIE fields, the third device may determine, through the detected two UIE fields (which are represented by UIE (1 +2) in FIG. 9), that the senders of the two UIE fields are the first device and the second device, respectively.

Taking FIG. 11 as an example, the second device may send the first field, the first device may send the second field, and the fourth device may send the fifth field. When detecting the UIE fields, the third device may determine, through the identity information included in the UIE fields, that the sending devices of the three received UIEs (which are represented by UIE (1 +2 +4) in FIG. 9) are the first device, the second device, and the fourth device, respectively.

It should be noted that the UIE field is only a name of the field, and the field carrying the first field and the second field may have another name, which is not limited in the present disclosure.

It should be noted that, in some embodiments, the UIE field may have other functions. For example, the UIE field may have a function of increasing processing time of a receiver (similar to the function of the PE field).

The identity information of the first device may be indicated by the tone set occupied by the second field. The tone set may include one or more tones. The tone may be an RU tone. The AP may set different tone sets for different devices. For example, the identity information of the second device may be indicated by the tone set occupied by the first field. Exemplarily, the mapping of the identity information and the tone sets may be as shown in Table 1.

Taking both the second field and the first field being carried in the UIE field as an example, the third device may determine the identity information of the device that sends the UIE field by detecting the energy of the tone(s). As an implementation, if the third device detects that the tone(s) in the first tone set has energy, it may be determined that the device corresponding to the first tone set sends the UIE field. For example, if the third device detects energy in the tone(s) in the tone set corresponding to the first device, the third device may determine that the first device sends the UIE field. Alternatively, if the third device detects energy in tones in the multiple tone sets, the third device may determine that all the multiple devices corresponding to the multiple tone sets send the UIE fields.

In some embodiments, the third device may detect the energy of the tone(s) within the first time window to determine identity information of the device(s) that send(s) the UIE field(s). If the third device detects the energy of the tone(s) within part or all of the time of the first time window, it may determine that the corresponding device(s) send(s) the UIE field(s). The first time window may include, for example, a period of time during which the first field is received.

There may be a transmission delay between different devices and the third device. Therefore, UIE fields sent by different devices may not reach the third device at the same time. That is, in a case that multiple UIE fields are sent simultaneously, it is difficult for the third device to simultaneously detect that tones corresponding to the multiple UIE fields have energy. According to the present disclosure, as long as the third device detects that the tone(s) corresponding to the UIE field has energy in the first time window, it may be considered that the corresponding device(s) sends the UIE field(s), thereby making the reception of the UIE field(s) more flexible and accurate. In some embodiments, the first field may be at the end of the first data unit. When the first field is at the end of the first data unit, the first device may have more time to detect the first data unit, and prepare the sending of the second field, and so on, thereby simplifying the transmission of the second field.

The first data unit may further include the third field. The third field may be before the first field. The third field may be used for reserving a time for the first device to switch to a transmission state. For example, within the time of the third field, the first device may transition from the reception state to the transmission state. It may be understood that the third field may reserve a preparation time for the first device to send the second field. The third field may also be referred to as a reverse interval (RI) field.

In some embodiments, the third field may be adjacent to the first field, so that the first device can send the second field as soon as possible after switching to the transmission state, thereby reducing the time for the first device to switch to the transmission state and reducing the energy consumption of the first device in the transmission state.

As described above, the third field is mainly used to reserve a period of time. Therefore, the signal carried in the third field is not limited in the present disclosure. For example, the third field may carry a random signal. Alternatively, the third field does not carry a valid signal. In other words, any signal may not be sent through the third field, or the third field may carry an invalid signal. Compared with other signals, the generation process of random signal or invalid signal is simpler, thus reducing the complexity for generating the third field.

Taking the first data unit as an UHR PPDU as an example, a PPDU format including a UIE field and/or an RI field will be described below with reference to FIG. 12. As illustrated in FIG. 12, the UIE field is at the end of the PPDU. The length of the UIE field may be variable. The RI field may be before the UIE field. The length of the RI field may be variable.

As illustrated in FIG. 12, the UHR PPDU may further include one or more of the following fields: L-STF, L-LTF, L-SIG field, repeated L-SIG (RL-SIG) field, universal signal (U-SIG) field, UHR-SIG field, UHR short training field (UHR-STF), and UHR long training field (UHR-LTF). Hereinafter, each of them will be described.

L-STF may be used for PPDU discovery and preliminary time-frequency synchronization.

L-LTF may be used for preliminary channel estimation and further time-frequency alignment.

The L-SIG may be used to carry information required for parsing the PPDU.

The RL-SIG may be a repetition of the L-SIG.

The U-SIG may be used to carry information required for parsing the PPDU.

The UHR-SIG field may be used to carry information related to DL MU transmission. The UHR-SIG field is only a name of the field, and the field used to carry the information related to the DL MU transmission may also be called another name.

On the one hand, the UHR-STF field is used to assist the receiver in performing preliminary time-frequency synchronization, and on the other hand, to assist the receiver in detecting the reliability of the PE subfield.

The UHR-LTF field is used by the receiver for channel estimation.

As described above, the first data unit may or may not include the first field. In a case that the first data unit includes the first field, the first device is capable of sending the second field. In a case that the first data unit does not include the first field, the first device cannot send the second field.

In some embodiments, the second device may send the first indication information. The first indication information may be used to indicate whether the first data unit includes the first field.

The first device may determine whether to send the second field according to the received first indication information.

The first indication information may be included in the indication data unit. Exemplarily, the first field may be included in a preamble of the indication data unit. The first device may obtain the first indication information by detecting the preamble of the indication data unit.

In some embodiments, the first data unit may be the indication data unit or a response data unit of the indication data unit. In other words, the first data unit may include the first indication information. Alternatively, in a case that the first data unit is the response data unit, the PPDU for responding the first data unit may include the first indication information.

Exemplarily, the indication data unit may include the fourth field. The fourth field may be used for indicating whether the first field is present in the current indication data unit and/or whether the first field is present in the response data unit. For example, the fourth field may be used for indicating one or more pieces of the following information: the indication data unit includes the first field; the response data unit of the indication data unit includes the first field; both the indication data unit and the response data unit of the indication data unit include the first field; and neither the indication data unit nor the response data unit of the indication data unit includes the first field.

Taking the first field carried in the UIE field as an example, the value of the fourth field may be shown in Table 2.

**Table 2**

| Value of the fourth field | Meaning |
|---|---|
| 0 | Neither the indication data unit nor the response data unit of the indication data unit includes the UIE field |
| 1 | The indication data unit includes the UIE |
| 2 | The response data unit of the indication data unit includes the UIE field |
| 3 | Both the indication data unit and the response data unit of the indication data unit include the UIE field |

In some embodiments, the first indication information may further indicate whether the first data unit includes the third field. Taking the third field carried in the RI field as an example, the value of the fourth field may be shown in Table 3.

**Table 3**

| Value of the fourth field | Meaning |
|---|---|
| 0 | Neither the indication data unit nor the response data unit of the indication data unit includes the UIE field and the RI field |
| 1 | The indication data unit including the UIE field and the RI field |
| 2 | The response data unit of the indication data unit includes the UIE field and the RI field |
| 3 | Both the indication data unit and the response data unit of the indication data unit include the UIE field and the RI field |

In some embodiments, the first indication information may be carried in the U-SIG field. For example, the U-SIG field may include a presence of UIE field. In a case that the presence of UIE field indicates that the UIE field is present, the first data unit may include the first field. In a case that the presence of the UIE field indicates that the UIE field is absent, the first data unit may not include the first field.

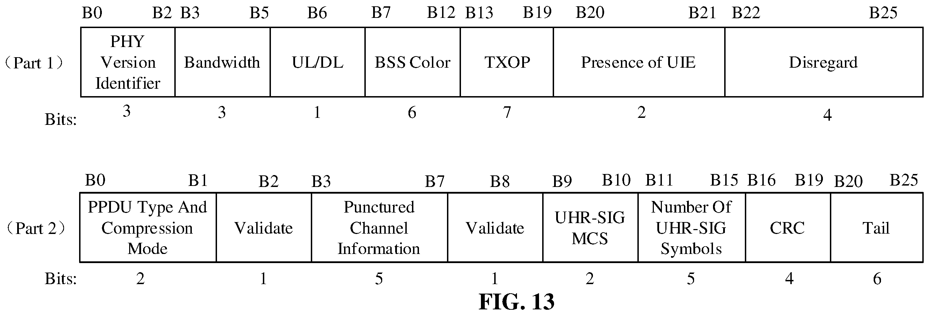

FIG. 13 is a schematic diagram of a U-SIG field format according to an embodiment of the present disclosure. As illustrated in FIG. 13, the U-SIG field may include the presence of UIE field. The U-SIG field may further include one or more of the following fields: a physical (PHY) version identifier field, a bandwidth field, an uplink/downlink (UL/DL) field, a BSS color field, a TXOP field, a disregard field, a validate field, a PPDU type and compression mode field, a punctured channel information field, a UHR-SIG modulation and coding scheme (MCS) field, a number of UHR-SIG symbols, a cyclic redundancy check (CRC), or a tail field. Some fields will be described below.

The PHY version identifier field is used to indicate different PHY versions.

The bandwidth field is used to indicate the bandwidth of the PPDU.

The UL/DL field is used to indicate whether the transmission direction of the PPDU is uplink or downlink.

The TXOP field is used to indicate the duration information of the TXOP and the value of the network allocation vector (NAV).

The disregard field is a disregarded reserved field.

The validate field is a reserved field for validation.

The PPDU Type and compression mode field is used to indicate the type of the PPDU.

The punctured channel information field is used to indicate the setting position and mode of the punctured PPDU.

The CRC field is used to check the cyclic redundancy codes of B0-B41 in the U-SIG field.

The tail field is a field used to terminate the trellis of the convolutional decoder.

In some embodiments, the first indication information may be carried in the UHR-SIG field. As described above, the UHR-SIG field may be used to carry information related to DL MU transmission. For example, the UHR-SIG field may include the presence of UIE field. For an explanation of the presence of UIE field, the reference is made to the above.

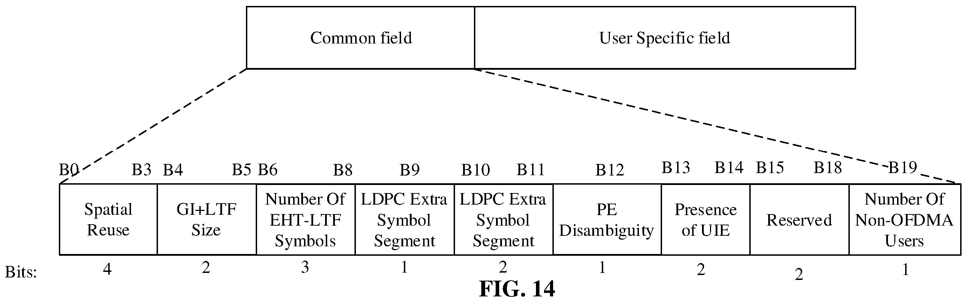

FIG. 14 is a schematic diagram of a UHR-SIG field format according to an embodiment of the present disclosure. As illustrated in FIG. 14, the UHR-SIG field may include a common field and a user specific field. The common field may include the presence of UIE field. The UHR-SIG field may further include one or more of the following fields: a Spatial Reuse field, a GI + LTF size field, a number of UHR-LTF symbols field, an LDPC extra symbol segment field, a pre-FEC padding factor, a PE disambiguity field, or a number of non-orthogonal frequency division multiple access (OFDMA) users field. A part of these fields are described below.

The Spatial Reuse field is used to indicate whether the spatial reuse mode is allowed in the process of transmission of this PPDU.

The GI + LTF Size field is used to indicate the duration of the GI and the type of the UHR-LTF.

The LDPC extra symbol segment field is used to indicate whether an LDPC extra symbol segment occurs.

The number of non-OFDMA users field is used to indicate the number of all non-OFDMA users.

As noted above, the identity information of the first device may be indicated by the tone set occupied by the second field. The tone set occupied by the second field may be configured by a setup element in the first frame. For example, the fourth device may indicate, through the setup field, the tone set used by the peer device to send the UIE field. The fourth device may be an AP. The fourth device may be the same as the second device or the third device. In a case that both the first field and the second field are carried in the UIE field, the setup element may also be referred to as a UIE setup element.

The setup element may include an identifier field of the tone set. The identifier may include, for example, respective tone identifiers, a tone set index field. The tone set index may represent one or more tones in the tone set by one index.

The corresponding tone set occupied by the UIE field may be configured for the first device by the setup element through the identifier field of the tone set. For example, when the first device sends the second field, the tone(s) in the tone set occupied by the UIE field configured for the first device may have energy, and the other tones may have no energy.

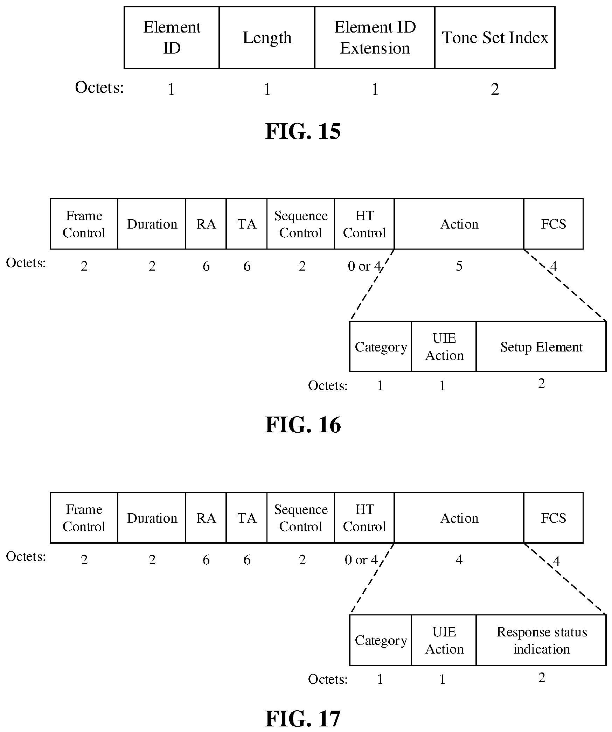

FIG. 15 is a schematic diagram of a setup element format according to an embodiment of the present disclosure. As illustrated in FIG. 15, the setup element may include a tone set index. The setup element may further include one or more of the following fields: an element ID field, an element ID extension field, and a length field. Hereinafter, each of them will be described.

The element ID field is used to identify the element as a setup element. The value of the element ID field may be, for example, 255.

The element ID extension field and the element ID field together identify the setup element. The value of the element ID extension field may be any integer from 136 to 255.

The length field may be used to indicate the number of octets in the element in addition to the element ID field and the length field.

As an implementation, the first frame may include a frame sent by the AP when the STA initially accesses the network. For example, the first frame may include one or more of: a probe response frame, an association response frame, and a reassociation response frame.

The first frame including the setup element may be an action frame. The first frame may belong to a newly defined action frame. For ease of description, this newly defined action frame may be referred to as a UIE action frame. The UIE action frame may be used for management of the UIE field. The UIE action frame may be distinguished from other action frames by a category field. For example, a value of 39 in the category field may indicate that the action frame is the UIE action frame. Different UIE action frames (i.e., subcategory of the UIE action frame) may be indicated by the UIE action field. For example, a value of 1 in the UIE action field in the first frame may indicate that the UIE action frame is a UIE update request frame.

As one implementation, the first frame may be a newly added frame. The newly added frame may be referred to as, for example, the second field update request frame or a UIE update request frame.

FIG. 16 is a schematic diagram of the second field update request frame format according to an embodiment of the present disclosure. As illustrated in FIG. 16, the second field update request frame may include a setup element. The setup element may be within the action field. The action field may further include a category field and/or a UIE action field.

The category field is used to indicate a specific category of the action frame. The value of this field is any integer from 39 to 125. For example, a value of 39 of the category field may indicate that the action frame is the UIE action frame category.

The UIE action field is used to indicate a subcategory of the UIE action frame. For example, a value of 1 of the UIE action field may indicate that the action frame is a UIE update request frame.

The second field update request frame may include one or more of the following fields: a frame control field, a duration field, a receiving address (RA) field, a transport address (TA) field, a sequence control field, a high throughput (HT) control field, an action field, and an FCS field. Hereinafter, each of them will be described.

The frame control field is used to indicate the version and specific type of the MAC.

The duration field is used to indicate the length of the TXOP.

The sequence control field is used to indicate the sequence number of the frame.

The second field update response frame corresponding to the second field update request frame may be used to respond to the update request of the second field. For example, the second field update response frame may be used to feedback whether the tone set of the second field is successfully configured.

In some embodiments, the second field update response frame may include a response status indication field. The response status indication field may be used to indicate whether the tone set is successfully configured. For example, a value of 1 of the response status indication field may indicate that the tone set is successfully configured, and a value of 0 of the response status indication field may indicate that the tone set is unsuccessfully configured. Alternatively, a value of 0 of the response status indication field may indicate that the tone set is successfully configured, and a value of 1 of the response status indication field may indicate that the tone set is unsuccessfully configured.

The second field update response frame may also be a UIE action frame.

FIG. 17 is a schematic diagram of the second field update response frame according to an embodiment of the present disclosure. As illustrated in FIG. 17, the second field update response frame may include a response status indication field. The response status indication field may be within the action field. The action field may further include a category field and/or a UIE action field.

The category field is used to indicate a specific category of the action frame. The value of this field is any integer from 39 to 125. For example, a value of 39 of the category field may indicate that the action frame is the UIE action frame category.

The UIE action field is used to indicate a subcategory of the UIE action frame. For example, a value of 2 of the UIE action field may indicate that the action frame is an update response frame.

As illustrated in FIG. 17, the update response frame may include one or more of the following fields: a frame control field, a duration field, an RA field, a TA field, a sequence control field, an HT control field, an action field, and an FCS field. For the description of each field, the reference may be made to the corresponding field in the second field update request frame.

The second field update response frame may further include one or more of the following fields: a frame control field, a duration field, an RA field, a TA field, a sequence control field, a HT control field, an action field, and an FCS field. For the meanings of these fields, the reference is made to the meanings of the corresponding fields in FIG. 16.

As described above, other devices may also send fields that are aligned in time with the first field and have the same bandwidth as the first field. Thus, the third device receiving the first data unit may detect the field set. The field set may include one or more detected fields that are aligned in time with the first field and have the same bandwidth as the first field. In a case that only the first device sends the second field, the field set includes the first field and the second field. In a case that the multiple devices all send fields that are aligned in time with the first device and have the same bandwidth as the first field, the field set includes multiple fields and the first field. The multiple fields may correspond to the multiple devices one-to-one.

In some embodiments, the third device may send the second indication information. The second indication information may be used to indicate that the second field is sent by the first device. Alternatively, the second indication information may be used to indicate whether the second field is detected by the third device. Alternatively, the second indication information may be used to indicate whether the field set is detected by the third device. Alternatively, the second indication information may be used to indicate the detection result for the UIE field. The detection result may include the number of fields in the detected field set and/or identity information corresponding to the detected field(s).

In some embodiments, the second indication information may be carried in the response data unit.

In some embodiments, the tone set occupied by the detected second field is indicated by a report element in the second frame. In other words, the report element may be used to indicate the detected field set. Alternatively, the report element may be used to indicate the tone set occupied by the detected field set. In a case that the second field is carried in the UIE field, the report element may also be referred to as a UIE report element.

Exemplarily, the report element includes one or more of the following fields: a number of tone set index field, and a list of tone set index field. The number of tone set index field may be used to indicate the number of tone set(s) occupied by the field set. The list of tone set index may be used to indicate the tone set(s) occupied by the field set. The number of tone set(s) included in the list of tone set index coincides with the number indicated by the number of tone set index field.

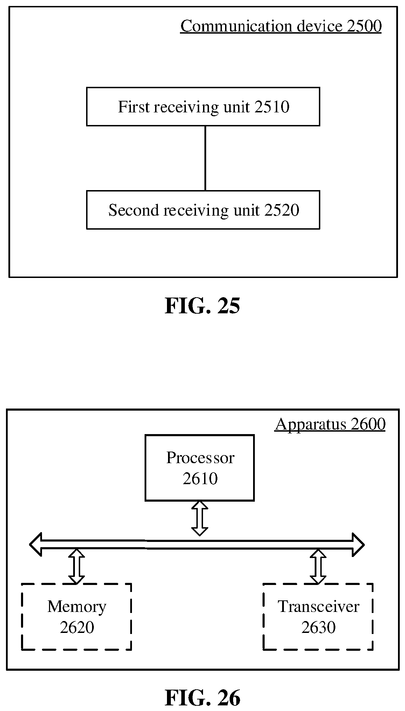

FIG. 26 is a schematic diagram of a report element format according to an embodiment of the present disclosure. As illustrated in FIG. 26, the report element may include the number of tone set index field and the list of tone set index field. The report element may further include one or more of the following fields: an element ID field, an element ID extension field, and a length field.

The element ID field is used to identify the element as a setup element. The value of the element ID field may be, for example, 255.

The element ID extension field and the element ID field together identify the setup element. The value of the element ID extension field may be any integer from 136 to 255.

The length field may be used to indicate the number of octets in the element in addition to the element ID field and the length field.

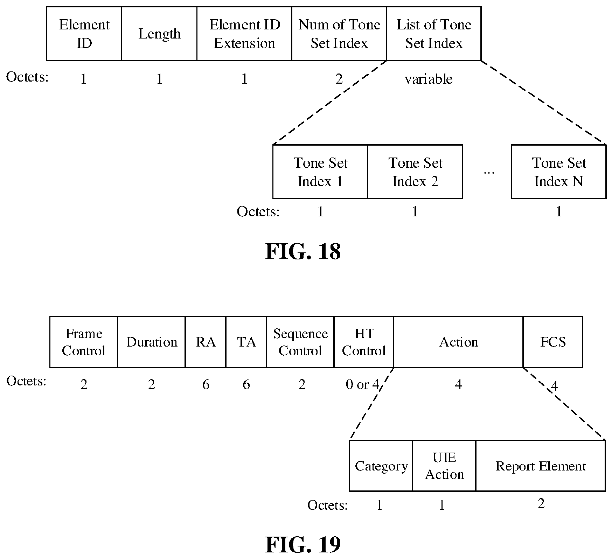

As an implementation, the second frame may include a report frame. The report frame may also be referred to as a UIE report frame. The report frame may be a UIE action frame described above. FIG. 19 is a schematic diagram of a UIE report frame format according to an embodiment of the present disclosure. As illustrated in FIG. 19, the UIE report frame may include a report element. The report element may be within the action field. The action field may further include a category field and/or a UIE action field.

The category field is used to indicate a specific type of the action frame. The value of this field is any integer from 39 to 125. For example, a value of 39 of the category field may indicate that the action frame is the UIE action frame category.

The UIE action field is used to indicate a subcategory of the UIE action frame. For example, a value of 3 of the UIE action field may indicate that the action frame is the UIE report frame.

As illustrated in FIG. 19, the UIE report frame may include one or more of the following fields: a frame control field, a duration field, an RA field, a TA field, a sequence control field, an HT control field, an action field, and an FCS field. For the description of the each field, the reference may be made to the corresponding fields in the second field update request frame.

For convenience of understanding, the present disclosure will be described below with reference to Embodiments 1 to 3.

### Embodiment 1

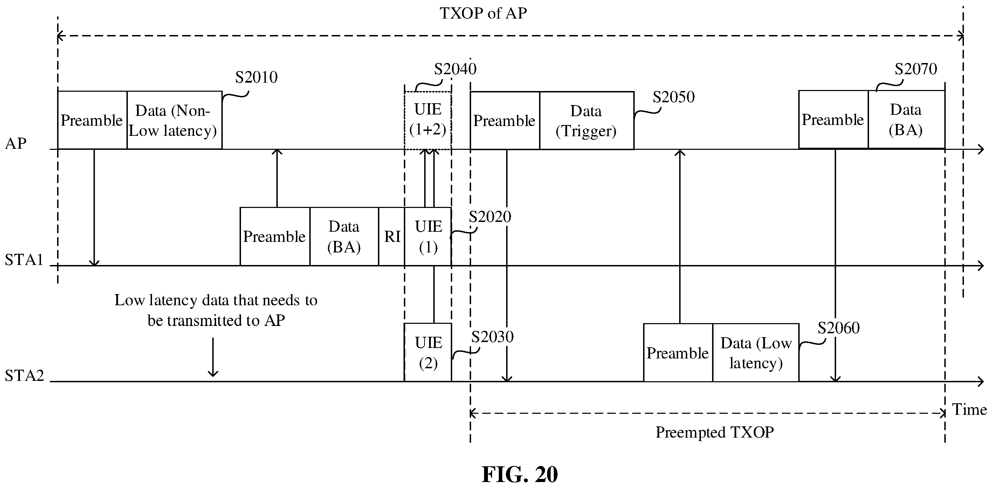

FIG. 20 is a schematic flowchart of a method according to Embodiment 1. The method illustrated in FIG. 20 may be performed by the AP, STA1, and STA2. The AP has completed association with both STA1 and STA2. The method illustrated in FIG. 20 includes the following operations S2010 to S2070.

In operation S2010, within the TXOP of the AP, the AP transmits downlink non-low latency data to the STA1.

In operation S2020, the STA1 replies the BA frame to the AP to acknowledge the success or failure of the transmission in the operation S2010.

Since the data being transmitted between the AP and the STA1 is a non-low latency service, the AP may indicate in the U-SIG field or the UHR-SIG field of the PPDU in the operation S2010 that the PPDU sent by the STA1 to the AP may include an RI field and a UIE field. For example, in the operation S2020, the PPDU carrying the BA frame may include the RI field and the UIE field.

It may be understood that, based on the operation S2020, other STAs may be allowed to send the UIE fields, so that the AP identifies UIEs that may be present in the UIE fields from multiple STAs and performs corresponding operations.

In the PPDU in the operation S2020, UIE (1) field identifies the AID of STA1.

In the operation S2030, the STA2 sends a UIE (2) field that is aligned with the UIE (1) field and identifies the AID of the STA2.

At the time illustrated in the figure, low latency service data that needs to be transmitted to the AP is reached to the STA2. However, at this time, the STA2 has not yet obtained the TXOP, so it can only receive the PPDU and cannot send the PPDU. When the STA2 receives the PPDU (i.e., the PPDU in the operation S2020), carrying the BA frame, including the RI field and UIE field, and sent by the STA1, the STA2 may discover, through a specific identification field, that the RI field and the UIE field are included at the end of the PPDU. In order to send the uplink low latency data as soon as possible, the STA2 completes the switching from the reception state to the transmission state within the time of the RI field, and sends a UIE (2) field that is aligned with the UIE (1) field and identifies the AID of the STA2, to inform the AP that the STA2 needs to preempt the next TXOP.

In operation S2040, the AP parses the UIE field to obtain the UIE (1) and the UIE (2), and further learns that the STA2 needs to send uplink low latency data.

In operation S2050, the AP sends a trigger frame to the STA 2.

In operation S2060, based on the trigger of the trigger frame, the STA2 sends uplink low latency data to the AP.

In operation S2070, in response to the operation S2060, the AP replies with the BA frame.

Based on the operations S2050 to S2070, the STA 2 completes the transmission of uplink low latency data.

### Embodiment 2

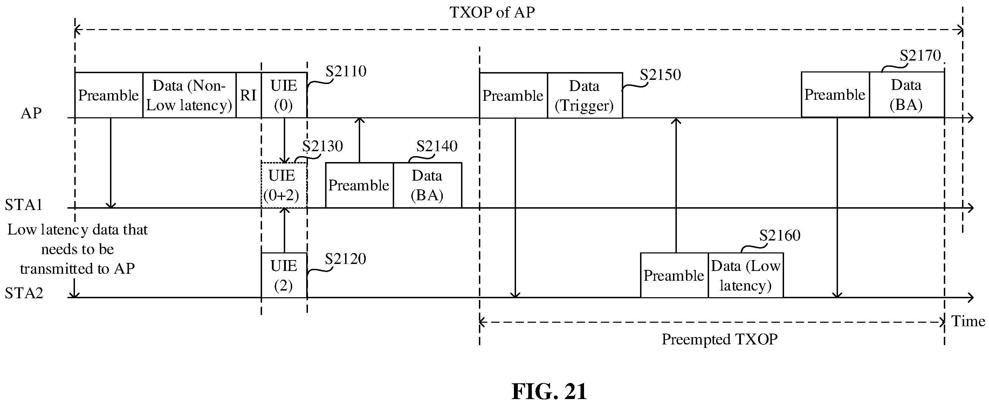

FIG. 21 is a schematic flowchart of a method according to Embodiment 2. The method illustrated in FIG. 21 may be performed by the AP, STA1, and STA2. The AP has completed association with both STA1 and STA2. The method illustrated in FIG. 21 includes operations S2110 to S2170.

In operation S2110, within the TXOP of the AP, the AP transmits non-low latency data to the STA 1.

Since the data transmission being performed by the AP is a non-low latency service, the PPDU sent by the AP to the STA1 may include the RI field and UIE (0) field. That is, other STAs are allowed to send the UIE field, and the STA1 is allowed to identify UIEs that may be present in the UIE fields from multiple STAs and performs corresponding operations. The UIE (0) field identifies the AID of the AP.

In operation S2120, the STA2 sends a UIE (2) field that is aligned with the UIE (0) field and identifies the AID of the STA 2.

At the time illustrated in the figure, uplink low latency service data that needs to be transmitted to the AP is reached to the STA2. However, at this time, the STA2 has not yet obtained the TXOP, so it can only receive the PPDU and cannot send the PPDU. After the STA2 receives the PPDU, including the RI field and UIE field and sent by the AP, the STA2 discovers, through a specific identification field, that the RI field and UIE field are included at the end of the PPDU. Therefore, in order to send the uplink low latency data as soon as possible, the STA2 completes the switching from the reception state to the transmission state within the time of the RI field, and then sends a UIE (2) field that is aligned with the UIE (0) field and identifies the AID of the STA2, to inform the STA1 that the STA2 needs to preempt the next TXOP.

In operation S2130, the STA1 parses the UIE field to obtain UIE (0) and UIE (2).

In the operation S2130, the STA1 learns that the STA2 needs to send the uplink low latency data.

In the operation S2140, the STA1 sends the PPDA. The PPDU may be used to inform the AP of the low latency data transmission requirement of the STA2.

In the operation S2150, the AP sends a trigger frame to the STA2.

In the operation S2160, the STA2 is triggered by the trigger frame in the operation S2150, and sends the uplink low latency data.

In the operation S2170, the AP replies to the STA2 with the BA frame corresponding to the operation S2160 to acknowledge the success or failure of the transmission in the operation S2160.

Based on the operations S2150 to S2170, the STA2 completes the transmission of uplink low latency data to the AP.

### Embodiment 3

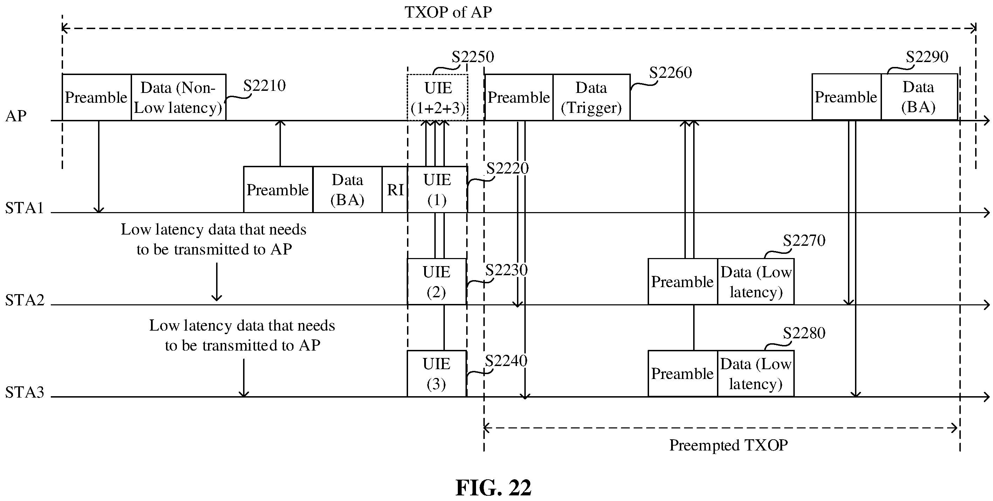

FIG. 22 is a schematic flowchart of a method according to Embodiment 3. The method illustrated in FIG. 22 may be performed by the AP, STA1, STA2, and STA3. The AP has completed association with STA1, STA2, and STA3. The method illustrated in FIG. 22 includes operations S2210 to S2290.

In operation S2210, within the TXOP of the AP, the AP transmits downlink non-low latency data to the STA1.

In the operation S2220, the STA1 replies the BA frame to the AP to acknowledge the success or failure of the transmission in the operation S2210.

Since the data being transmitted between the AP and the STA1 is a non-low latency service, the AP may indicate in the U-SIG field or the UHR-SIG field of the PPDU transmitted by the AP that the PPDU sent by the STA1 to the AP may include an RI field and a UIE field. For example, in the operation S2220, the PPDU carrying the BA frame may include the RI field and the UIE field. In other words, the AP allows other STAs to send the UIE fields, so that the AP identifies UIEs that may be present in the UIE fields from multiple STAs and performs corresponding operations. The UIE (1) field in FIG. 22 identifies the AID of the STA1.

In operation S2230, the STA2 sends a UIE (2) field that is aligned with the UIE (1) field and identifies the AID of the STA2.

In operation S2240, the STA3 sends a UIE (3) field that is aligned with the UIE (1) field and identifies the AID of the STA3.

As illustrated in FIG. 22, at the times illustrated in figure, low-latency service data that needs to be transmitted to the AP is reached to the STA2 and the STA3, respectively. However, STA2 and STA3 have not yet obtained the TXOP, so they can only receive the PPDU. When STA2 and STA3 receive the PPDU, carrying the BA frame, including the RI field and UIE field, and sent by the STA1, they discover through a specific identification field that the RI field and UIE field are included at the end of the PPDU. Based on this, in order to send uplink low latency data as soon as possible, the STA2 and STA3 respectively complete the switching from the reception state to the transmission state within the time of the RI field, and respectively send a UIE (2) field and a UIE (3) field that are aligned with the UIE (1) field and identify the AIDs of the STA2 and STA3, to inform the AP that both STA2 and STA3 need to preempt the next TXOP.

In operation S2250, the AP parses the UIE field to obtain UIE (1), UIE (2), and UIE (3).

According to the operation S2250, the AP may learn that the STA2 and STA3 need to send the uplink low latency data.

In operation S2260, the AP sends a trigger frame to STA2 and STA3.

In operation S2270, the STA2 is triggered by the trigger frame and sends low latency data.

In operation S2280, the STA 3 is triggered by the trigger frame and sends low latency data.

In operation S2290, the AP replies to STA 2 and STA 3 with the BA frame.

Based on the operations S2260 to S2290, the STA2 and STA3 complete the transmission of uplink low latency data.

Method embodiments of the present disclosure are described in detail above, and apparatus embodiments of the present disclosure are described in detail below. It should be understood that the description of the method embodiments and the description of the apparatus embodiments correspond to each other, and therefore, the portions not described in detail may be referred to the foregoing method embodiments.

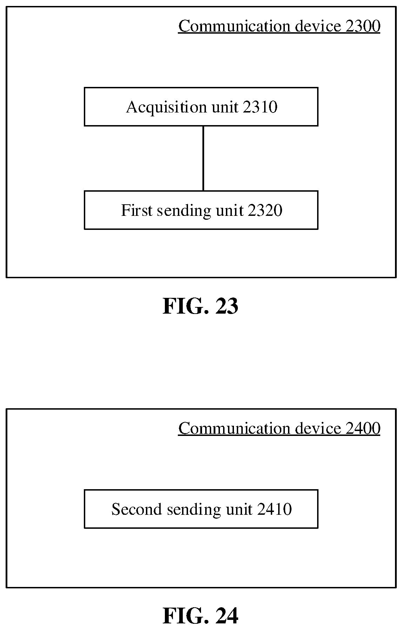

FIG. 23 is a schematic structural diagram of a communication device 2300 according to an embodiment of the present disclosure. The communication device 2300 is the first device. The communication device 2300 includes an acquisition unit 2310 and the first sending unit 2320.

The acquisition unit 2310 is configured to acquire the first data unit sent by the second device to the third device. The first data unit includes the first field.

The first sending unit 2320 is configured to send the second field. The second field is aligned in time with the first field, and the second field has a same bandwidth as the first field.

In some embodiments, the second field is used to indicate identity information of the first device.

In some embodiments, the identity information of the first device is indicated by a tone set occupied by the second field, and the tone set includes one or more tones.

In some embodiments, the second device or the third device is a device that obtains a TXOP.

In some embodiments, the first data unit further includes the third field. The third field is used for reserving time for the first device to switch to a transmission state.

In some embodiments, the third field carries a random signal, or the third field does not carry a valid signal.

In some embodiments, the communication device is further configured to acquire the first indication information. The first indication information is used to indicate whether the first data unit includes the first field.

In some embodiments, the first indication information is included in an indication data unit, and the first data unit is the indication data unit or a response data unit of the indication data unit.

In some embodiments, the indication data unit includes the fourth field. The fourth field is used for indicating one or more of following information: the indication data unit includes the first field; the response data unit of the indication data unit includes the first field; both the indication data unit and the response data unit of the indication data unit include the first field; or neither the indication data unit nor the response data unit of the indication data unit includes the first field.

In some embodiments, the first indication information is carried in a U-SIG field or a UHR-SIG field, and the UHR-SIG field is used to carry information related to DL MU transmission.

In some embodiments, a tone set occupied by the second field is configured by a setup element in the first frame, and the tone set includes one or more tones.

In some embodiments, the setup element includes a tone set index field, and the tone set index field is used for configuring the tone set.

In some embodiments, the first frame includes one or more of: a probe response frame, an association response frame, a reassociation response frame, and the second field update request frame.

In some embodiments, the first frame is an action frame.

In some embodiments, the second field update response frame corresponding to the second field update request frame includes a response status indication field, and the response status indication field is used for indicating whether the tone set is successfully configured.

In some embodiments, a tone set occupied by a detected second field is indicated by a report element in the second frame, and the tone set includes one or more tones.

In some embodiments, the second field belongs to a field set, and the field set includes one or more detected fields that are aligned in time with the first field, and have the same bandwidth as the first field. The report element includes one or more of: a number of tone set index field; or a list of tone set index field. The number of tone set index field is used for indicating the number of tone set(s) occupied by the field set. The list of tone set index field is used for indicating tone set(s) occupied by the field set.

In some embodiments, the second frame is an action frame.

In some embodiments, the second field is used to indicate a data transmission requirement of the first device.

In some embodiments, the data transmission requirement includes a low latency data transmission requirement.

In some embodiments, data associated with the first data unit is non-low latency data.

In some embodiments, the first field is at an end of the first data unit.

In some embodiments, the first data unit is a PPDU.

In an alternative embodiment, the first sending unit 2320 may be a transceiver 2630. The acquisition unit 2310 may be the processor 2610. The communication device 2300 may further include a memory 2620, as specifically illustrated in FIG. 26.

FIG. 24 is a schematic structural diagram of a communication device 2400 according to an embodiment of the present disclosure. The communication device 2300 is the second device. The communication device 2400 includes the first sending unit 2410.

The first sending unit 2410 is configured to send the first data unit to the third device. The first data unit includes the first field. The second field sent by the first device is aligned in time with the first field, and the second field has a same bandwidth as the first field.

In some embodiments, the second field is used to indicate identity information of the first device.

In some embodiments, the identity information of the first device is indicated by a tone set occupied by the second field, and the tone set includes one or more tones.

In some embodiments, the second device or the third device is a device that obtains a TXOP.

In some embodiments, the communication device is further configured to: receive the second indication information. The second indication information is used to indicate that the second field is sent by the first device.

In some embodiments, the first data unit further includes the third field. The third field is used for reserving time for the first device to switch to a transmission state.

In some embodiments, the third field carries a random signal, or the third field does not carry a valid signal.

In some embodiments, the communication device is further configured to: send the first indication information. The first indication information is used to indicate whether the first data unit includes the first field.

In some embodiments, the first indication information is included in an indication data unit, and the first data unit is the indication data unit or a response data unit of the indication data unit.

In some embodiments, the indication data unit includes the fourth field. The fourth field is used for indicating one or more of following information: the indication data unit includes the first field; the response data unit of the indication data unit includes the first field; both the indication data unit and the response data unit of the indication data unit include the first field; or neither the indication data unit nor the response data unit of the indication data unit includes the first field.

In some embodiments, the first indication information is carried in a U-SIG field or a UHR-SIG field, and the UHR-SIG field is used to carry information related to DL MU transmission.

In some embodiments, a tone set occupied by the second field is configured by a setup element in the first frame, and the tone set includes one or more tones.

In some embodiments, the setup element includes a tone set index field, and the tone set index field is used for configuring the tone set.

In some embodiments, the first frame includes one or more of: a probe response frame, an association response frame, a reassociation response frame, and the second field update request frame.

In some embodiments, the first frame is an action frame.

In some embodiments, a second field update response frame corresponding to the second field update request frame includes a response status indication field. The response status indication field is used for indicating whether the tone set is successfully configured.

In some embodiments, a tone set occupied by the detected second field is indicated by a report element in the second frame, and the tone set includes one or more tones.

In some embodiments, the second field belongs to a field set, and the field set includes one or more detected fields that are aligned in time with the first field, and have the same bandwidth as the first field. The report element includes one or more of: a number of tone set index field,; or a list of tone set index field. The number of tone set index field is used for indicating a number of tone set(s) occupied by the field set. The list of tone set index field is used for indicating tone set(s) occupied by the field set.

In some embodiments, the second frame is an action frame.

In some embodiments, the second field is used to indicate a data transmission requirement of the first device.

In some embodiments, the data transmission requirement includes a low latency data transmission requirement.

In some embodiments, data associated with the first data unit is non-low latency data.

In some embodiments, the first field is at an end of the first data unit.

In some embodiments, the first data unit is a PPDU.

In an alternative embodiment, the second sending unit 2410 may be a transceiver 2630. The communication device 2400 may further include a processor 2610 and a memory 2620, as specifically illustrated in FIG. 26.

FIG. 25 is a schematic structural diagram of a communication device 2500 according to an embodiment of the present disclosure. The communication device 2500 is the third device. The communication device 2500 includes the first receiving unit 2510 and the second receiving unit 2520.

The first receiving unit 2510 is configured to receive the first data unit sent by the second device. The first data unit includes the first field.

The second receiving unit 2520 is configured to receive the second field sent by the first device.

The second field is aligned in time with the first field, and the second field has a same bandwidth as the first field.

In some embodiments, the second field is used to indicate identity information of the first device.

In some embodiments, the identity information of the first device is indicated by a tone set occupied by the second field, and the tone set includes one or more tones.

In some embodiments, the second device or the third device is a device that obtains a TXOP.

In some embodiments, the communication device is further configured to: send the second indication information to the second device. The second indication information is used to indicate that the second field is sent by the first device.

In some embodiments, the first data unit further includes the third field. The third field is used for reserving time for the first device to switch to a transmission state.

In some embodiments, the third field carries a random signal, or the third field does not carry a valid signal.

In some embodiments, the communication device is further configured to: send the first indication information. The first indication information is used to indicate whether the first data unit includes the first field.

In some embodiments, the first indication information is included in an indication data unit, and the first data unit is the indication data unit or a response data unit of the indication data unit.

In some embodiments, the indication data unit includes the fourth field. The fourth field is used for indicating one or more of following information: the indication data unit includes the first field; the response data unit of the indication data unit includes the first field; both the indication data unit and the response data unit of the indication data unit include the first field; or neither the indication data unit nor the response data unit of the indication data unit includes the first field.

In some embodiments, the first indication information is carried in a U-SIG field or a UHR-SIG field, and the UHR-SIG field is used to carry information related to DL MU transmission.

In some embodiments, a tone set occupied by the second field is configured by a setup element in the first frame, and the tone set includes one or more tones.

In some embodiments, the setup element includes a tone set index field, and the tone set index field is used for configuring the tone set.

In some embodiments, the first frame includes one or more of: a probe response frame, an association response frame, a reassociation response frame, and the second field update request frame.

In some embodiments, the first frame is an action frame.

In some embodiments, the second field update response frame corresponding to the second field update request frame includes a response status indication field, and the response status indication field is used for indicating whether the tone set is successfully configured.

In some embodiments, a tone set occupied by the detected second field is indicated by a report element in the second frame, and the tone set includes one or more tones.

In some embodiments, the second field belongs to a field set, and the field set includes one or more detected fields that are aligned in time with the first field, and have the same bandwidth as the first field. The report element includes one or more of: a number of tone set index field; or a list of tone set index field. The list of tone set index field is used for indicating tone set(s) occupied by the field set. The number of tone set index field is used for indicating the number of tone set(s) occupied by the field set.

In some embodiments, the second frame is an action frame.

In some embodiments, the second field is used to indicate a data transmission requirement of the first device.

In some embodiments, the data transmission requirement includes a low latency data transmission requirement.

In some embodiments, data associated with the first data unit is non-low latency data.

In some embodiments, the first field is at an end of the first data unit.

In some embodiments, the first data unit is a PPDU.

In an alternative embodiment, the first receiving unit 2510 or the second receiving unit 2520 may be a transceiver 2630. The communication device 2500 may further include a processor 2610 and a memory 2620, as specifically illustrated in FIG. 26.

FIG. 26 is a schematic structural diagram of an apparatus for communication according to an embodiment of the present disclosure. The dashed line in FIG. 26 represents that the unit or module is optional. The apparatus 2600 may be used to implement the methods described in the method embodiments described above. The apparatus 2600 may be a chip, a terminal device, or a network device.

The apparatus 2600 may include one or more processors 2610. The processor 2610 may support the apparatus 2600 to implement the methods described in the previous method embodiments. The processor 2610 may be a general-purpose processor or a special-purpose processor. For example, the processor may be a central processing unit (CPU). Alternatively, the processor may also be another general-purpose processor, a digital signal processor (DSP), an application specific integrated circuit (ASIC), a field programmable gate array (FPGA) or other programmable logic device, a discrete gate or transistor logic device, a discrete hardware component, or the like. The general-purpose processor may be a microprocessor or the processor may be any conventional processor or the like.

The apparatus 2600 may further include one or more memories 2620. The memory 2620 has stored a program that may be executed by the processor 2610 to cause the processor 2610 to perform the methods described in the above method embodiments. The memory 2620 may be independent of the processor 2610 or may be integrated in the processor 2610.

The apparatus 2600 may further include a transceiver 2630. The processor 2610 may communicate with other devices or chips through the transceiver 2630. For example, the processor 2610 may send and receive data with other devices or chips through the transceiver 2630.

The embodiments of the present disclosure further provide a computer-readable storage medium for storing a program. The computer-readable storage medium may be applied to a terminal or a network device provided by the embodiments of the present disclosure, and the program causes a computer to execute methods executed by the terminal or the network device in various embodiments of the present disclosure.

The embodiments of the present disclosure further provide a computer program product. The computer program product includes a program. The computer program product may be applied to a terminal or a network device provided by the embodiments of the present disclosure, and the program causes a computer to execute methods executed by the terminal or the network device in various embodiments of the present disclosure.

The embodiments of the present disclosure further provide a computer program. The computer program may be applied to a terminal or a network device provided by the embodiments of the present disclosure, and the computer program causes a computer to execute the methods executed by the terminal or the network device in various embodiments of the present disclosure.

It is to be understood that the terms "system" and "network" may be used interchangeably in the present disclosure. In addition, the terminology used in the present disclosure is for explanation of specific embodiments of the present disclosure only, and is not intended to limit the present disclosure. The terms "first", "second", "third" and "fourth" etc. in the specification and claims and the accompanying drawings of the present disclosure are used to distinguish different objects, and are not used to describe a specific order. Furthermore, the terms "including" and "having" and any variations thereof are intended to cover non-exclusive inclusions.

In the embodiments of the present disclosure, the "indication" mentioned may be a direct indication, an indirect indication, or an associated relationship. For example, A indicates B, which may mean that A directly indicates B, for example, B may be acquired through A. It may also mean that A indicates B indirectly, for example A indicates C, and B may be acquired through C. It may also be indicated that there is an association relationship between A and B.

In the embodiments of the present disclosure, "B corresponding to A" means that B is associated with A, and B may be determined from A. However, it should also be understood that determining B from A does not mean that B is determined from A alone, and that B may also be determined from A and/or other information.

In the embodiments of the present disclosure, the term "correspondence" may indicate that there is a direct correspondence or indirect correspondence relationship between the two objects, may indicate that there is a correlation relationship between the two objects, or may indicate a relationship between indicating and being instructed, configuring and being configured, or the like.

In the embodiments of the present disclosure, "predefined" or "preconfigured" may be realized by storing corresponding codes, tables, or other methods that may be used to indicate relevant information in advance in devices (including, for example, terminal devices and network devices), and the present disclosure does not limit specific implementation methods thereof. For example, "predefined" may refer to defined in the protocol.

In the embodiments of the present disclosure, the "protocol" may refer to a standard protocol in the communication field, and may include, for example, an LTE protocol, an NR protocol, and related protocols applied to future communication systems, and the present disclosure is not limited thereto.

The term "and/or" in the embodiments of the present disclosure is only used for describing an association relationship of association objects, and indicates that there may be three kinds of relationships, for example, A and/or B, which may indicate that A exists alone, A and B exist simultaneously, and B exists alone. In addition, the character "/" in the present disclosure generally indicates that there is an "or" relationship between the association objects.

In the embodiments of the present disclosure, the "including" may refer to directly including or indirectly including. Alternatively, the reference to "including" in the embodiments of the present disclosure may be replaced with "indicating" or "for determining". For example, A includes B, which may be replaced with that A indicates B, or A is used to determine B.

In various embodiments of the present disclosure, the size of the sequence number of the above-described processes does not mean the sequence of execution, and the sequence of execution of each process should be determined by its function and internal logic, and should not constitute any limitation on the implementation of the embodiments of the present disclosure.

In several embodiments provided herein, it should be understood that the disclosed systems, apparatuses, and methods may be implemented in other ways. For example, the apparatus embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate units may or may not be physically separate, and the units displayed as units may or may not be physical units, that is, they may be located in one place or may be distributed over multiple network units. Some or all of the units may be selected according to actual needs to achieve the purpose of the solution of the present embodiment.

In addition, each functional unit in each embodiment of the present disclosure may be integrated in one processing unit, each unit may be physically present alone, or two or more units may be integrated in one unit.

In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server, or data center by wired (e.g., coaxial cable, optical fiber, digital subscriber line (DSL)) or wireless (e.g., infrared, wireless, microwave, etc.) means to another website site, computer, server, or data center. The computer-readable storage medium may be any available medium that can be read by a computer or a data storage device such as a server, a data center, or the like that incorporates one or more available media integrations. The available media may be magnetic medium (e.g., floppy disk, hard disk, magnetic tape), optical media (e.g., digital video disc (DVD)), or semiconductor media (e.g., solid state disk (SSD)), etc.

The above is merely specific embodiments of the present disclosure, but the scope of protection of the present disclosure is not limited thereto, and any person skilled in the art can easily think of changes or substitutions within the technical scope disclosed in the present disclosure, which should be covered within the scope of protection of the present disclosure. Therefore, the scope of protection of the present disclosure should be based on the scope of protection of the claims.

## Claims

1. A method for wireless communication, comprising:
acquiring, by a first device, a first data unit sent by a second device to a third device, wherein the first data unit comprises a first field; and
sending, by the first device, a second field, wherein the second field is aligned in time with the first field, and the second field has a same bandwidth as the first field.

2. The method of claim 1, wherein the second field is used to indicate identity information of the first device.

3. The method of claim 2, wherein the identity information of the first device is indicated by a tone set occupied by the second field, and the tone set comprises one or more tones.

4. The method of any one of claims 1 to 3, wherein the second device or the third device is a device that obtains a transmission opportunity (TXOP).

5. The method of any one of claims 1 to 4, wherein the first data unit further comprises a third field, and the third field is used for reserving time for the first device to switch to a transmission state.

6. The method of claim 5, wherein the third field carries a random signal or the third field does not carry a valid signal.

7. The method of any one of claims 1 to 6, further comprising:
acquiring, by the first device, first indication information,
wherein the first indication information is used to indicate whether the first data unit comprises the first field.

8. The method of claim 7, wherein the first indication information is comprised in an indication data unit, and the first data unit is the indication data unit or a response data unit of the indication data unit.

9. The method of claim 8, wherein the indication data unit comprises a fourth field, and the fourth field is used for indicating one or more of following information:
the indication data unit comprises the first field;
the response data unit of the indication data unit comprises the first field;
both the indication data unit and the response data unit of the indication data unit comprise the first field; or
neither the indication data unit nor the response data unit of the indication data unit comprises the first field.

10. The method of any one of claims 7 to 9, wherein the first indication information is carried in a universal signal (U-SIG) field or an ultra high reliability signal (UHR-SIG) field, and the UHR-SIG field is used to carry information related to downlink multiuser (DL MU) transmission.

11. The method of any one of claims 1 to 10, wherein a tone set occupied by the second field is configured by a setup element in a first frame, and the tone set comprises one or more tones.

12. The method of claim 11, wherein the setup element comprises a tone set index field, and the tone set index field is used for configuring the tone set.

13. The method of claim 11 or 12, wherein the first frame comprises one or more of: a probe response frame, an association response frame, a reassociation response frame, and a second field update request frame.

14. The method of any one of claims 11 to 13, wherein the first frame is an action frame.

15. The method of any one of claims 13 or 14, wherein a second field update response frame corresponding to the second field update request frame comprises a response status indication field, and the response status indication field is used for indicating whether the tone set is successfully configured.

16. The method of any one of claims 1 to 15, wherein a tone set occupied by a detected second field is indicated by a report element in a second frame, and the tone set comprises one or more tones.

17. The method of claim 16, wherein the second field belongs to a field set, and the field set comprises one or more detected fields that are aligned in time with the first field, and have the same bandwidth as the first field, and
the report element comprises one or more of:
a number of tone set index field, wherein the number of tone set index field is used for indicating a number of tone set(s) occupied by the field set; or
a list of tone set index field, wherein the list of tone set index field is used for indicating tone set(s) occupied by the field set.

18. The method of claim 16 or 17, wherein the second frame is an action frame.

19. The method of any one of claims 1 to 18, wherein the second field is used to indicate a data transmission requirement of the first device.

20. The method of claim 19, wherein the data transmission requirement comprises a low latency data transmission requirement.

21. The method of any one of claims 1 to 20, wherein data associated with the first data unit is non-low latency data.

22. The method of any one of claims 1 to 21, wherein the first field is at an end of the first data unit.

23. The method of any one of claims 1 to 22, wherein the first data unit is a physical protocol data unit (PPDU).

24. A method for wireless communication, comprising:
sending, by a second device, a first data unit to a third device, wherein the first data unit comprises a first field,
wherein a second field sent by a first device is aligned in time with the first field, and the second field has a same bandwidth as the first field.

25. The method of claim 24, wherein the second field is used to indicate identity information of the first device.

26. The method of claim 25, wherein the identity information of the first device is indicated by a tone set occupied by the second field, and the tone set comprises one or more tones.

27. The method of any one of claims 24 to 26, wherein the second device or the third device is a device that obtains a transmission opportunity (TXOP).

28. The method of claim 27, further comprising:
receiving, by the second device, second indication information,
wherein the second indication information is used to indicate that the second field is sent by the first device.

29. The method of any one of claims 24 to 28, wherein the first data unit further comprises a third field, and the third field is used for reserving time for the first device to switch to a transmission state.

30. The method of claim 29, wherein the third field carries a random signal or the third field does not carry a valid signal.

31. The method of any one of claims 24 to 30, further comprising:
sending, by the second device, first indication information,
wherein the first indication information is used to indicate whether the first data unit comprises the first field.

32. The method of claim 31, wherein the first indication information is comprised in an indication data unit, and the first data unit is the indication data unit or a response data unit of the indication data unit.

33. The method of claim 32, wherein the indication data unit comprises a fourth field, and the fourth field is used for indicating one or more of following information:
the indication data unit comprises the first field;
the response data unit of the indication data unit comprises the first field;
both the indication data unit and the response data unit of the indication data unit comprises the first field; or
neither the indication data unit nor the response data unit of the indication data unit comprises the first field.

34. The method of any one of claims 31 to 33, wherein the first indication information is carried in a universal signal (U-SIG) field or an ultra high reliability signal (UHR-SIG) field, and the UHR-SIG field is used to carry information related to downlink multiuser (DL MU) transmission.

35. The method of any one of claims 24 to 34, wherein a tone set occupied by the second field is configured by a setup element in a first frame, and the tone set comprises one or more tones.

36. The method of claim 35, wherein the setup element comprises a tone set index field, and the tone set index field is used for configuring the tone set.

37. The method of claim 35 or 36, wherein the first frame comprises one or more of: a probe response frame, an association response frame, a reassociation response frame, and a second field update request frame.

38. The method of any one of claims 35 to 37, wherein the first frame is an action frame.

39. The method of any one of claims 37 or 38, wherein a second field update response frame corresponding to the second field update request frame comprises a response status indication field, and the response status indication field is used for indicating whether the tone set is successfully configured.

40. The method of any one of claims 24 to 39, wherein a tone set occupied by a detected second field is indicated by a report element in a second frame, and the tone set comprises one or more tones.

41. The method of claim 40, wherein the second field belongs to a field set, and the field set comprises one or more detected fields that are aligned in time with the first field, and have the same bandwidth as the first field, and
the report element comprises one or more of:
a number of tone set index field, wherein the number of tone set index field is used for indicating a number of tone set(s) occupied by the field set; or
a list of tone set index field, wherein the list of tone set index field is used for indicating tone set(s) occupied by the field set.

42. The method of claim 40 or 41, wherein the second frame is an action frame.

43. The method of any of claims 24 to 42, wherein the second field is used to indicate a data transmission requirement of the first device.

44. The method of claim 43, wherein the data transmission requirement comprises a low latency data transmission requirement.

45. The method of any one of claims 24 to 44, wherein data associated with the first data unit is non-low latency data.

46. The method of any one of claims 24 to 45, wherein the first field is at an end of the first data unit.

47. The method of any one of claims 24 to 46, wherein the first data unit is a physical protocol data unit (PPDU).

48. A method for wireless communication, comprising:
receiving, by a third device, a first data unit sent by a second device, wherein the first data unit comprises a first field; and
receiving, by the third device, a second field sent by a first device,
wherein the second field is aligned in time with the first field, and the second field has a same bandwidth as the first field.

49. The method of claim 48, wherein the second field is used to indicate identity information of the first device.

50. The method of claim 49, wherein the identity information of the first device is indicated by a tone set occupied by the second field, and the tone set comprises one or more tones.

51. The method of any one of claims 48 to 50, wherein the second device or the third device is a device that obtains a transmission opportunity (TXOP).

52. The method of claim 51, further comprising:
sending, by the third device, second indication information to the second device,
wherein the second indication information is used to indicate that the second field is sent by the first device.

53. The method of any one of claims 48 to 52, wherein the first data unit further comprises a third field, and the third field is used for reserving time for the first device to switch to a transmission state.

54. The method of claim 53, wherein the third field carries a random signal or the third field does not carry a valid signal.

55. The method of any one of claims 48 to 54, further comprising:
sending, by the third device, first indication information,
wherein the first indication information is used to indicate whether the first data unit comprises the first field.

56. The method of claim 55, wherein the first indication information is comprised in an indication data unit, and the first data unit is the indication data unit or a response data unit of the indication data unit.

57. The method of claim 56, wherein the indication data unit comprises a fourth field, and the fourth field is used for indicating one or more of following information:
the indication data unit comprises the first field;
the response data unit of the indication data unit comprises the first field;
both the indication data unit and the response data unit of the indication data unit comprises the first field; or
neither the indication data unit nor the response data unit of the indication data unit comprises the first field.

58. The method of any one of claims 55 to 57, wherein the first indication information is carried in a universal signal (U-SIG) field or an ultra high reliability signal (UHR-SIG) field, and the UHR-SIG field is used to carry information related to downlink multiuser (DL MU) transmission.

59. The method of any one of claims 48 to 58, wherein a tone set occupied by the second field is configured by a setup element in a first frame, and the tone set comprises one or more tones.

60. The method of claim 59, wherein the setup element comprises a tone set index field, and the tone set index field is used for configuring the tone set.

61. The method of claim 59 or 60, wherein the first frame comprises one or more of: a probe response frame, an association response frame, a reassociation response frame, and a second field update request frame.

62. The method of any one of claims 59 to 61, wherein the first frame is an action frame.

63. The method of any one of claims 61 or 62, wherein a second field update response frame corresponding to the second field update request frame comprises a response status indication field, and the response status indication field is used for indicating whether the tone set is successfully configured.

64. The method of any one of claims 48 to 63, wherein a tone set occupied by a detected second field is indicated by a report element in a second frame, and the tone set comprises one or more tones.

65. The method of claim 64, wherein the second field belongs to a field set, and the field set comprises one or more detected fields that are aligned in time with the first field, and have the same bandwidth as the first field, and
the report element comprises one or more of:
a number of tone set index field, wherein the number of tone set index field is used for indicating a number of tone set(s) occupied by the field set; or
a list of tone set index field, wherein the list of tone set index field is used for indicating tone set(s) occupied by the field set.

66. The method of claim 64 or 65, wherein the second frame is an action frame.

67. The method of any of claims 48 to 66, wherein the second field is used to indicate a data transmission requirement of the first device.

68. The method of claim 67, wherein the data transmission requirement comprises a low latency data transmission requirement.

69. The method of any one of claims 48 to 68, wherein data associated with the first data unit is non-low latency data.

70. The method of any one of claims 48 to 69, wherein the first field is at an end of the first data unit.

71. The method of any one of claims 48 to 70, wherein the first data unit is a physical protocol data unit (PPDU).

72. A communication device, wherein the communication device is a first device, and the communication device comprises:
an acquisition unit, configured to acquire a first data unit sent by a second device to a third device, wherein the first data unit comprises a first field; and
a first sending unit, configured to send a second field, wherein the second field is aligned in time with the first field, and the second field has a same bandwidth as the first field.

73. The communication device of claim 72, wherein the second field is used to indicate identity information of the first device.

74. The communication device of claim 73, wherein the identity information of the first device is indicated by a tone set occupied by the second field, and the tone set comprises one or more tones.

75. The communication device of any one of claims 72 to 74, wherein the second device or the third device is a device that obtains a transmission opportunity (TXOP).

76. The communication device of any one of claims 72 to 75, wherein the first data unit further comprises a third field, and the third field is used for reserving time for the first device to switch to a transmission state.

77. The communication device of claim 76, wherein the third field carries a random signal or the third field does not carry a valid signal.

78. The communication device of any one of claims 72 to 77, further configured to:
acquire first indication information,
wherein the first indication information is used to indicate whether the first data unit comprises the first field.

79. The communication device of claim 78, wherein the first indication information is comprised in an indication data unit, and the first data unit is the indication data unit or a response data unit of the indication data unit.

80. The communication device of claim 79, wherein the indication data unit comprises a fourth field, and the fourth field is used for indicating one or more of following information:
the indication data unit comprises the first field;
the response data unit of the indication data unit comprises the first field;
both the indication data unit and the response data unit of the indication data unit comprises the first field; or
neither the indication data unit nor the response data unit of the indication data unit comprises the first field.

81. The communication device of any one of claims 78 to 80, wherein the first indication information is carried in a universal signal (U-SIG) field or an ultra high reliability signal (UHR-SIG) field, and the UHR-SIG field is used to carry information related to downlink multiuser (DL MU) transmission.

82. The communication device of any one of claims 72 to 81, wherein a tone set occupied by the second field is configured by a setup element in a first frame, and the tone set comprises one or more tones.

83. The communication device of claim 82, wherein the setup element comprises a tone set index field, and the tone set index field is used for configuring the tone set.

84. The communication device of claim 82 or 83, wherein the first frame comprises one or more of: a probe response frame, an association response frame, a reassociation response frame, and a second field update request frame.

85. The communication device of any one of claims 82 to 84, wherein the first frame is an action frame.

86. The communication device of any one of claims 84 or 85, wherein a second field update response frame corresponding to the second field update request frame comprises a response status indication field, and the response status indication field is used for indicating whether the tone set is successfully configured.

87. The communication device of any of claims 72 to 86, wherein a tone set occupied by a detected second field is indicated by a report element in a second frame, and the tone set comprises one or more tones.

88. The communication device of claim 87, wherein the second field belongs to a field set, and the field set comprises one or more detected fields that are aligned in time with the first field, and have the same bandwidth as the first field, and
the report element comprises one or more of:
a number of tone set index field, wherein the number of tone set index field is used for indicating a number of tone set(s) occupied by the field set; or
a list of tone set index field, wherein the list of tone set index field is used for indicating tone set(s) occupied by the field set.

89. The communication device of claim 87 or 88, wherein the second frame is an action frame.

90. The communication device of any one of claims 72 to 89, wherein the second field is used to indicate a data transmission requirement of the first device.

91. The communication device of claim 90, wherein the data transmission requirement comprises a low latency data transmission requirement.

92. The communication device of any one of claims 72 to 91, wherein data associated with the first data unit is non-low latency data.

93. The communication device of any one of claims 72 to 92, wherein the first field is at an end of the first data unit.

94. The communication device of any one of claims 72 to 93, wherein the first data unit is a physical protocol data unit (PPDU).

95. A communication device, wherein the communication device is a second device, and the communication device comprises:
a first sending unit, configured to send a first data unit to a third device, wherein the first data unit comprises a first field,
wherein a second field sent by a first device is aligned in time with the first field, and the second field has a same bandwidth as the first field.

96. The communication device of claim 95, wherein the second field is used to indicate identity information of the first device.

97. The communication device of claim 96, wherein the identity information of the first device is indicated by a tone set occupied by the second field, and the tone set comprises one or more tones.

98. The communication device of any one of claims 95 to 97, wherein the second device or the third device is a device that obtains a transmission opportunity (TXOP).

99. The communication device of claim 98, further configured to:
receive second indication information,
wherein the second indication information is used to indicate that the second field is sent by the first device.

100. The communication device of any one of claims 95 to 99, wherein the first data unit further comprises a third field, and the third field is used for reserving time for the first device to switch to a transmission state.

101. The communication device of claim 100, wherein the third field carries a random signal or the third field does not carry a valid signal.

102. The communication device of any one of claims 95 to 101, further configured to:
send first indication information,
wherein the first indication information is used to indicate whether the first data unit comprises the first field.

103. The communication device of claim 102, wherein the first indication information is comprised in an indication data unit, and the first data unit is the indication data unit or a response data unit of the indication data unit.

104. The communication device of claim 103, wherein the indication data unit comprises a fourth field, and the fourth field is used for indicating one or more of following information:
the indication data unit comprises the first field;
the response data unit of the indication data unit comprises the first field;
both the indication data unit and the response data unit of the indication data unit comprises the first field; or
neither the indication data unit nor the response data unit of the indication data unit comprises the first field.

105. The communication device of any one of claims 102 to 104, wherein the first indication information is carried in a universal signal (U-SIG) field or an ultra high reliability signal (UHR-SIG) field, and the UHR-SIG field is used to carry information related to downlink multiuser (DL MU) transmission.

106. The communication device of any one of claims 95 to 105, wherein a tone set occupied by the second field is configured by a setup element in a first frame, and the tone set comprises one or more tones.

107. The communication device of claim 106, wherein the setup element comprises a tone set index field, and the tone set index field is used for configuring the tone set.

108. The communication device of claim 106 or 107, wherein the first frame comprises one or more of: a probe response frame, an association response frame, a reassociation response frame, and a second field update request frame.

109. The communication device of any one of claims 106 to 108, wherein the first frame is an action frame.

110. The communication device of any one of claims 108 or 109, wherein a second field update response frame corresponding to the second field update request frame comprises a response status indication field, and the response status indication field is used for indicating whether the tone set is successfully configured.

111. The communication device of any one of claims 95 to 110, wherein a tone set occupied by a detected second field is indicated by a report element in a second frame, and the tone set comprises one or more tones.

112. The communication device of claim 111, wherein the second field belongs to a field set, and the field set comprises one or more detected fields that are aligned in time with the first field, and have the same bandwidth as the first field, and
the report element comprises one or more of:
a number of tone set index field, wherein the number of tone set index field is used for indicating a number of tone set(s) occupied by the field set; or
a list of tone set index field, wherein the list of tone set index field is used for indicating tone set(s) occupied by the field set.

113. The communication device of claim 111 or 112, wherein the second frame is an action frame.

114. The communication device of any one of claims 95 to 113, wherein the second field is used to indicate a data transmission requirement of the first device.

115. The communication device of claim 114, wherein the data transmission requirement comprises a low latency data transmission requirement.

116. The communication device of any one of claims 95 to 115, wherein data associated with the first data unit is non-low latency data.

117. The communication device of any one of claims 95 to 116, wherein the first field is at an end of the first data unit.

118. The communication device of any one of claims 95 to 117, wherein the first data unit is a physical protocol data unit (PPDU).

119. A communication device, wherein the communication device is a third device, and the communication device comprises:
a first receiving unit, configured to receive a first data unit sent by a second device, wherein the first data unit comprises a first field; and
a second receiving unit, configured to receive a second field sent by a first device,
wherein the second field is aligned in time with the first field, and the second field has a same bandwidth as the first field.

120. The communication device of claim 119, wherein the second field is used to indicate identity information of the first device.

121. The communication device of claim 120, wherein the identity information of the first device is indicated by a tone set occupied by the second field, and the tone set comprises one or more tones.

122. The communication device of any one of claims 119 to 121, wherein the second device or the third device is a device that obtains a transmission opportunity (TXOP).

123. The communication device of claim 122, further configured to:
send second indication information to the second device,
wherein the second indication information is used to indicate that the second field is sent by the first device.

124. The communication device of any one of claims 119 to 123, wherein the first data unit further comprises a third field, and the third field is used for reserving time for the first device to switch to a transmission state.

125. The communication device of claim 124, wherein the third field carries a random signal, or the third field does not carry a valid signal.

126. The communication device of any one of claims 119 to 125, further configured to:
send first indication information,
wherein the first indication information is used to indicate whether the first data unit comprises the first field.

127. The communication device of claim 126, wherein the first indication information is comprised in an indication data unit, and the first data unit is the indication data unit or a response data unit of the indication data unit.

128. The communication device of claim 127, wherein the indication data unit comprises a fourth field, and the fourth field is used for indicating one or more of following information:
the indication data unit comprises the first field;
the response data unit of the indication data unit comprises the first field;
both the indication data unit and the response data unit of the indication data unit comprises the first field; or
neither the indication data unit nor the response data unit of the indication data unit comprises the first field.

129. The communication device of any one of claims 126 to 128, wherein the first indication information is carried in a universal signal (U-SIG) field or an ultra high reliability signal (UHR-SIG) field, and the UHR-SIG field is used to carry information related to downlink multiuser (DL MU) transmission.

130. The communication device of any one of claims 119 to 129, wherein a tone set occupied by the second field is configured by a setup element in a first frame, and the tone set comprises one or more tones.

131. The communication device of claim 130, wherein the setup element comprises a tone set index field, and the tone set index field is used for configuring the tone set.

132. The communication device of claim 130 or 131, wherein the first frame comprises one or more of: a probe response frame, an association response frame, a reassociation response frame, and a second field update request frame.

133. The communication device of any one of claims 130 to 132, wherein the first frame is an action frame.

134. The communication device of any one of claims 132 or 133, wherein a second field update response frame corresponding to the second field update request frame comprises a response status indication field, and the response status indication field is used for indicating whether the tone set is successfully configured.

135. The communication device of any of claims 119 to 134, wherein a tone set occupied by a detected second field is indicated by a report element in a second frame, and the tone set comprises one or more tones.

136. The communication device of claim 135, wherein the second field belongs to a field set, and the field set comprises one or more detected fields that are aligned in time with the first field, and have the same bandwidth as the first field, and
the report element comprises one or more of:
a number of tone set index field, wherein the number of tone set index field is used for indicating a number of tone set(s) occupied by the field set; or
a list of tone set index field, wherein the list of tone set index field is used for indicating tone set(s) occupied by the field set.

137. The communication device of claim 135 or 136, wherein the second frame is an action frame.

138. The communication device of any one of claims 119 to 137, wherein the second field is used to indicate a data transmission requirement of the first device.

139. The communication device of claim 138, wherein the data transmission requirement comprises a low latency data transmission requirement.

140. The communication device of any one of claims 119 to 139, wherein data associated with the first data unit is non-low latency data.

141. The communication device of any one of claims 119 to 140, wherein the first field is at an end of the first data unit.

142. The communication device of any one of claims 119 to 141, wherein the first data unit is a physical protocol data unit (PPDU).

143. A communication device comprising a memory and a processor, wherein the memory is configured to store a program, and the processor is configured to invoke the program in the memory to cause the communication device to perform the method of any one of claims 1 to 71.

144. An apparatus comprising a processor, wherein the processor is configured to invoke a program from a memory to cause the apparatus to perform the method of any one of claims 1 to 71.

145. A chip comprising a processor, wherein the processor is configured to invoke a program from a memory to cause a device on which the chip is mounted to perform the method of any one of claims 1 to 71.

146. A computer-readable storage medium having stored thereon a program that causes a computer to perform the method of any one of claims 1 to 71.

147. A computer program product comprising a program that causes a computer to perform the method of any one of claims 1 to 71.

148. A computer program causing a computer to perform the method of any one of claims 1 to 71.
